(19) **Europäisches Patentamt European Patent Office Office européen des brevets**

(11) **EP 4 253 628 A1**

(12) **EUROPEAN PATENT APPLICATION**
published in accordance with Art. 153(4) EPC

(43) Date of publication:
04.10.2023 Bulletin 2023/40

(21) Application number: 20963385.8

(22) Date of filing: 31.12.2020

(51) International Patent Classification (IPC):
*D06F 34/28* (2020.01)    *B29C 45/27* (2006.01)

(52) Cooperative Patent Classification (CPC):
**B29C 45/27; D06F 34/28**

(86) International application number:
**PCT/CN2020/141969**

(87) International publication number:
**WO 2022/110497 (02.06.2022 Gazette 2022/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 30.11.2020 CN 202011385088
30.11.2020 CN 202022841918 U

(71) Applicant: **Wuxi Little Swan Electric Co., Ltd.**
**Wuxi, Jiangsu 214028 (CN)**

(72) Inventors:
• **LIU, Zhongcai**
**Wuxi, Jiangsu 214028 (CN)**

• **GAO, Fei**
**Wuxi, Jiangsu 214028 (CN)**
• **CAO, Chunde**
**Wuxi, Jiangsu 214028 (CN)**
• **SUN, Qing**
**Wuxi, Jiangsu 214028 (CN)**
• **HAN, Xiaofei**
**Wuxi, Jiangsu 214028 (CN)**
• **LI, Birong**
**Wuxi, Jiangsu 214028 (CN)**

(74) Representative: **Whitlock, Holly Elizabeth Ann et al**
**Maucher Jenkins**
**Seventh Floor Offices**
**Artillery House**
**11-19 Artillery Row**
**London SW1P 1RT (GB)**

(54) **APPEARANCE PART, HOUSEHOLD APPLIANCE AND MOLD**

(57) An appearance part, a household appliance and a mold. The appearance part comprises a connecting plate and an appearance panel, wherein one side surface of the appearance panel in the thickness direction is an appearance surface; the appearance panel extends in the circumferential direction of the connecting plate; one end of the appearance panel in the width direction is connected to the outer peripheral wall of the connecting plate; the wall thickness of the appearance panel is gradually increased and then gradually decreased in the direction from one end of the appearance panel in the width direc-tion to the other end of the appearance panel in the width direction; one side surface of the connecting plate in the thickness direction is provided with at least one sprue forming area which is arranged adjacent to the appear-ance panel, and/or one end, of one side surface of the appearance panel away from the appearance surface of the appearance panel, that is adjacent to the connecting plate is provided with at least one sprue forming area; and the sprue forming area is adapted to correspond to a sprue of the mold.

**(Cont. next page)**

EP 4 253 628 A1

FIG. 1

**Description**

The present application is based on and claims priority to Chinese Patent Applications No. 202011385088.5 and No. 202022841918.2, filed on November 30, 2020, the entire disclosure of which are incorporated herein by reference.

**FIELD**

The present disclosure relates to the field of household appliances technologies, and more particularly, to an appearance part, a household appliance, and a mold.

**BACKGROUND**

In general, a household appliance such as a front-load washing machine has appearance parts including parts such as a control panel and a dispenser handle, and these appearance parts have dual requirements of functions and appearance.

In the related art, when the appearance part is injection molded, a flow liner defect is prone to occur on a product. Severe flow liners generated on an appearance surface of the appearance part would result in a low qualification rate and high cost of the product. As a result, user's usage demands cannot be satisfied.

**SUMMARY**

The present disclosure aims to solve at least one of the technical problems existing in the related art. Accordingly, an object of the present disclosure is to provide an appearance part with a high qualification rate.

The present disclosure further provides a household appliance including the appearance part described above.

The present disclosure further provides a mold for shaping an appearance part.

An appearance part according to embodiments of the present disclosure is an integral injection-molding piece. The appearance part includes a connection plate and an appearance plate. A side surface of the appearance plate in a thickness direction of the appearance plate is an appearance surface. The appearance plate extends in a peripheral direction of the connection plate. An end of the appearance plate in a width direction of the appearance plate is connected to an outer peripheral wall of the connection plate. A wall thickness of the appearance plate gradually increases and then gradually decreases in a direction from the end to another end of the appearance plate in the width direction of the appearance plate. A side surface of the connection plate in a thickness direction of the connection plate has at least one gate forming region formed adjacent to the appearance plate; and/or an end, adjacent to the connection plate, of a side surface of the appearance plate facing away from the appearance surface of the appearance plate has at least one gate forming region. The at least one gate forming region is adapted to correspond to a gate of a mold.

With the appearance part according to the embodiments of the present disclosure, the wall thickness of the appearance plate gradually increases and then gradually decreases in the direction from the end to the other end of the appearance plate in the width direction of the appearance plate. In this way, flow liners on the appearance plate can be at least reduced to some extent, to at least prevent the flow liners from being generated on an appearance surface of the appearance plate to some extent. Therefore, qualified rate of the appearance part can be at least improved to some extent, thereby lowering cost and satisfying user's usage demands.

According to some embodiments of the present disclosure, a wall thickness of an end of the connection plate connected to the appearance plate is equal to or smaller than a wall thickness of the end of the appearance plate in the width direction of the appearance plate.

According to some embodiments of the present disclosure, the wall thickness of the end of the connection plate connected to the appearance plate is smaller than a minimum wall thickness of the appearance plate.

According to some embodiments of the present disclosure, in the peripheral direction of the connection plate, the appearance plate includes a first plate body and a second plate body that are connected to each other. An angle is formed between the first plate body and the second plate body. Each of the first plate body and the second plate body is connected to the connection plate. The at least one gate forming region is formed adjacent to a connection between the first plate body and the second plate body.

According to some embodiments of the present disclosure, the at least one gate forming region includes a plurality of gate forming regions spaced apart from each other in the peripheral direction of the connection plate.

According to some embodiments of the present disclosure, the appearance part is a spray-free piece including a resin matrix and metal particles distributed in the resin matrix.

According to some embodiments of the present disclosure, the metal particles are aluminum, silver, or copper.

According to some embodiments of the present disclosure, the at least one gate forming region is formed on the side surface of the connection plate in the thickness direction of the connection plate. A minimum distance between the at least one gate forming region adjacent to the appearance plate and the appearance plate is smaller than or equal to 20 mm.

According to some embodiments of the present disclosure, the minimum distance between the at least one gate forming region adjacent to the appearance plate and the appearance plate is smaller than or equal to 10 mm.

According to some embodiments of the present disclosure, the minimum distance between the at least one gate forming region adjacent to the appearance plate and the appearance plate is 0 mm.

According to some embodiments of the present disclosure, an end, adjacent to the connection plate, of a side surface of the appearance plate facing away from the appearance surface of the appearance plate has at least one gate forming region, and a minimum distance between the at least one gate forming region and the connection plate is smaller than or equal to 10 mm.

According to some embodiments of the present disclosure, the end, adjacent to the connection plate, of the side surface of the appearance plate facing away from the appearance surface of the appearance plate has the at least one gate forming region, and the minimum distance between the at least one gate forming region and the connection plate is equal to 0 mm.

A household appliance according to embodiments of the present disclosure includes the appearance part as described above.

With the household appliance according to the embodiments of the present disclosure, by providing the appearance part as described above, the wall thickness of the appearance plate gradually increases and then gradually decreases in the direction from the end to the other end of the appearance plate in the width direction of the appearance plate. In this way, the flow liners on the appearance plate can be at least reduced to some extent, to at least prevent the flow liners from being generated on the appearance surface of the appearance plate to some extent. Therefore, qualified rate of the appearance part can be at least improved to some extent, thereby lowering the cost and satisfying the user's usage demands.

A mold according to embodiments of the present disclosure includes a mold core having a mold cavity. The mold cavity includes an appearance plate mold cavity and a connection plate mold cavity. An end of the appearance plate mold cavity in a width direction of the appearance plate mold cavity is in communication with an outer periphery of the connection plate mold cavity. The appearance plate mold cavity extends in a peripheral direction of the connection plate mold cavity. A thickness of the appearance plate mold cavity gradually increases and then gradually decreases in a direction from the end to another end of the appearance plate mold cavity in the width direction of the appearance plate mold cavity. A side wall surface of the appearance plate mold cavity in a thickness direction of the appearance plate mold cavity is configured to shape an appearance surface of an appearance plate. The mold core has at least one gate located on a side wall surface of the connection plate mold cavity in a thickness direction of the connection plate mold cavity, and the at least one gate is formed adjacent to the appearance plate mold cavity; and/or the mold core has at least one gate located on another side wall surface of the appearance plate mold cavity in the thickness direction of the appearance plate mold cavity and adjacent to the connection plate mold cavity.

With the mold according to the embodiments of the present disclosure, the thickness of the appearance plate mold cavity gradually increases and then gradually decreases in the direction from the end of to the other end of the appearance plate mold cavity in the width direction of the appearance plate mold cavity. In this way, the flow liners on the appearance plate can be at least reduced to some extent, to at least prevent the flow liners from being generated on the appearance surface of the appearance plate to some extent. Therefore, qualified rate of the appearance part can be at least improved to some extent, thereby lowering the cost and satisfying the user's usage demands.

According to some embodiments of the present disclosure, a thickness of an end, in communication with the appearance plate mold cavity, of the connection plate mold cavity is smaller than or equal to a thickness of the end of the appearance plate mold cavity in the width direction of the appearance plate mold cavity.

According to some embodiments of the present disclosure, the thickness of the end, in communication with the appearance plate mold cavity, of the connection plate mold cavity is smaller than a minimum thickness of the appearance plate mold cavity.

According to some embodiments of the present disclosure, in the peripheral direction of the connection plate mold cavity, the appearance plate mold cavity includes a first plate body mold cavity and a second plate body mold cavity that are in communication with each other. An angle is formed between the first plate body mold cavity and the second plate body mold cavity. Each of the first plate body mold cavity and the second plate body mold cavity is in communication with the connection plate mold cavity. The at least one gate is formed adjacent to a communication between the first plate body mold cavity and the second plate body mold cavity.

According to some embodiments of the present disclosure, the at least one gate includes a plurality of gates spaced apart from each other in the peripheral direction of the connection plate mold cavity.

According to some embodiments of the present disclosure, a minimum distance between the at least one gate adjacent to the appearance plate mold cavity and the appearance plate mold cavity is smaller than or equal to 20 mm.

According to some embodiments of the present disclosure, the mold core has at least one gate located on the other side wall surface of the appearance plate mold cavity in the thickness direction of the appearance plate mold cavity and adjacent to the connection plate mold cavity. A minimum distance between the at least one gate and the connection plate mold cavity is smaller than or equal to 10 mm.

Additional aspects and advantages of the present disclosure will be provided at least in part in the following description or will become apparent at least in part from the following description or can be learned from practicing of the present disclosure.

**BRIEF DESCRIPTION OF THE DRAWINGS**

The above and/or additional embodiments of the present disclosure will become apparent and readily understood from the following description of embodiments in conjunction with the accompanying drawings, in which:

FIG. 1 is a schematic view of a control panel according to some embodiments of the present disclosure;
FIG. 1a is an enlarged view of Part 1B illustrated in FIG. 1;
FIG. 1b is an enlarged view of Part 2B illustrated in FIG. 1;
FIG. 1c is an enlarged view of Part 3B illustrated in FIG. 1;
FIG. 2 is a schematic cross-sectional view in A-A direction as illustrated in FIG. 1, in which an arrow width A1 is a width direction of a panel side plate, an arrow thickness A2 is a thickness direction of the panel side plate, and an arrow thickness A1 is a thickness direction of a panel connection plate;
FIG. 3 is an enlarged view of Part B illustrated in FIG. 1;
FIG. 4 is a schematic view of a control panel according to some embodiments of the present disclosure in another direction;
FIG. 5 is a schematic cross-sectional view in C-C direction as illustrated in FIG. 4;
FIG. 6 is an enlarged view of Part E illustrated in FIG. 5;
FIG. 7 is a schematic view of a panel mold according to some embodiments of the present disclosure;
FIG. 8 is a schematic cross-sectional view in F-F direction as illustrated in FIG. 7;
FIG. 9 is an enlarged view of Part H illustrated in FIG. 8, in which a width A2 is a width direction of a panel side plate mold cavity;
FIG. 10 is a schematic cross-sectional view in G-G direction as illustrated in FIG. 7;
FIG. 11 is an enlarged view of Part M illustrated in FIG. 10;
FIG. 12 is a schematic flow view of a material in a panel side plate mold cavity according to some embodiments of the present disclosure;
FIG. 13 is a schematic flow view of a material in a panel side plate mold cavity according to other embodiments of the present disclosure;
FIG. 14 is a schematic flow view of a material in a panel side plate mold cavity according to other embodiments of the present disclosure;
FIG. 15 is a schematic flow view of a material in a panel side plate mold cavity according to other embodiments of the present disclosure;
FIG. 16 is a schematic flow view of a material in a mold cavity in the related art.

Reference Numerals:

control panel 10; panel connection plate 101; panel gate forming region 1011; one panel gate forming region 1011a; panel blocking hole 1012; one panel blocking hole 1012a; panel side plate 102; first side plate body 1021; second side plate body 1022; panel top plate 103; panel connection rib 104; panel connection rib body 1041; panel connection portion 1042;
panel mold 1; panel mold core 11; panel connection plate mold cavity 111; panel gate 1111; panel side plate mold cavity 112; first side plate body mold cavity 1121; panel top plate mold cavity 113; panel connection rib mold cavity 114; panel connection rib body mold cavity 1141; panel connection portion mold cavity 1142.

**DETAILED DESCRIPTION OF THE EMBODIMENTS**

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the accompanying drawings are illustrative only, and are intended to explain, rather than limiting the present disclosure.

In general, a household appliance such as a front-load washing machine has an appearance part including parts such as a control panel and a dispenser handle, which has dual requirements of function and appearance.

Generally, a manufacturing process for the appearance part is mostly implemented through an injection molding and spraying process, and the sprayed appearance part has a gorgeous metal appearance effect. However, the spraying process has the defects such as serious pollution, high cost, low qualified rate, unrecyclable unqualified product, and the like, which seriously affects health of environment and production personnel, and does not conform to the green manufacturing concept. In order to overcome the defects in the spraying process, a spraying-free thermoplastic engineering material emerges, and the metal appearance effect of a product can be given by spraying-free injection molding. As a result, the spraying process can be replaced, thereby lowering production cost. Meanwhile, it is possible to avoid emission of pollutants during the spraying.

No matter whether the appearance part is manufactured by using a spraying-free material or through the injection molding and spraying process, for a material with poor fluidity, especially for a spraying-free material including metal particles, since there are the metal particles and other substances in the spraying-free material, uneven arrangement of the metal particles may be generated due to an obstruction to the material when flowing during the injection molding. As a result, the injection-molded product may occur light scattering under an irradiation of light, and flow liners thus are visually generated on the product, which results in a flow liner defect on the product. When the flow liners are generated on an appearance surface of the product, it not only leads to low qualified rate but also cannot satisfy user's usage demands. A description will be provided below taking the spraying-free material including metal particles as an example. That is, the appearance part may be a spray-free piece including a resin matrix and metal particles distributed in the resin matrix. Optionally, the metal particles are aluminum, silver, or copper.

According to the embodiments of the present disclosure, an appearance part, a household appliance, and a mold for shaping the appearance part will be described below. Therefore, the appearance part is an integral injection-molding piece. As a result, a structure of the integral piece not only can ensure structural and performance stability of the appearance part, but also leads to convenient shaping and simple manufacturing. Moreover, redundant assembly parts and connection steps can be removed, and connection reliability of the appearance part can be ensured. Furthermore, the integrally formed structure is high in overall strength and stability, is more convenient to be assembled, and is longer in service life.

According to the embodiments of the present disclosure, an appearance part includes a connection plate and an appearance plate.

A surface of the connection plate is a non-appearance surface. That is, when the appearance part is applied in the household appliance, the surface of the connection plate is not exposed.

The appearance plate extends in a peripheral direction of the connection plate. An end of the appearance plate in a width direction of the appearance plate is connected to an outer peripheral wall of the connection plate. A side surface of the appearance plate in a thickness direction of the appearance plate is an appearance surface. It should be noted that the end of the appearance plate in the width direction of the appearance plate is an end connected to the connection plate, and another end of the appearance plate in the width direction of the appearance plate is an end away from the connection plate.

In some embodiments, a side surface of the connection plate in a thickness direction of the connection plate has at least one gate forming region. The at least one gate forming region is adapted to correspond to a gate of a mold and is formed adjacent to the appearance plate. The other end of the appearance plate in the width direction of the appearance plate has minimum wall thickness. In this way, flow liners on the appearance plate can be at least reduced to some extent, to at least prevent the flow liners from being generated on the appearance surface of the appearance plate to some extent. Thus, qualified rate of the appearance part can be improved, thereby lowering cost and satisfying user's usage demands.

In some embodiments, an end, adjacent to the connection plate, of a side surface of the appearance plate facing away from the appearance surface of the appearance plate has at least one gate forming region. The at least one gate forming region is adapted to correspond to a gate of a mold. The other end of the appearance plate in the width direction of the appearance plate has the minimum wall thickness. In this way, the flow liners on the appearance plate can be at least reduced to some extent, to at least prevent the flow liners from being generated on the appearance surface of the appearance plate to some extent. Therefore, the qualified rate of the appearance part can be at least improved to some extent, thereby lowering the cost and satisfying the user's usage demands.

In some embodiments, after an appearance part blank is formed through the injection molding by the mold and is de-molded from the mold, a part of a material at the gate of the mold is left on the appearance part blank and is formed into a gate forming portion. The gate forming region of the appearance part is a region where the gate forming portion is located. It can be understood that the appearance part blank may be further processed to cut away or partially cut away the gate forming portion. In an example, the gate forming portion of the appearance part blank may not be processed. That is, the gate forming portion is remained on the appearance part. The embodiment of the present disclosure is not limited in this regard, and the gate forming portion may be provide as desired.

In order to facilitate explaining the reason why the flow liners on the appearance part are reduced, a mold according to embodiments of the present disclosure will be described below, and the reason why the flow liners on the appearance surface of the appearance plate are reduced will be also provided in principle and in combination with a structure of the mold.

According to the embodiments of the present disclosure, the mold for shaping an appearance part of a household appliance includes a mold core, and the mold core has a mold cavity.

The mold cavity includes a connection plate mold cavity and an appearance plate mold cavity. The connection plate mold cavity is configured to shape the connection plate as described above, and the appearance plate mold cavity is configured to shape the appearance plate as describe above. The appearance plate mold cavity extends in a peripheral direction of the connection plate mold cavity. An end of the appearance plate mold cavity in a width direction of the appearance plate mold cavity is in communication with an outer periphery of the connection plate mold cavity. The other end of the appearance plate mold cavity in the width direction of the appearance plate mold cavity has a minimum thickness. A side wall surface of the appearance plate mold cavity in a thickness direction of the appearance plate mold cavity is configured to shape an appearance surface of an appearance plate. It can be understood that the end of the appearance plate mold cavity in the width direction of the appearance plate mold cavity is an end in communication with the connection plate mold cavity, and the other end of the appearance plate mold cavity in the width direction of the appearance plate mold cavity is an end away from the outer periphery of the connection plate mold cavity.

In some embodiments, the mold core has at least one gate located on a side wall surface of the connection plate mold cavity in a thickness direction of the connection plate mold cavity. The at least one gate is formed adjacent to the appearance plate mold cavity.

In some embodiments, the mold core has at least one gate. The at least one gate is located on the other side wall surface of the appearance plate mold cavity in the thickness direction of the appearance plate mold cavity (i.e., a side wall surface opposite to the appearance surface of the molded appearance plate) and is formed adjacent to the connection plate mold cavity.

The reason why the flow liners are reduced will be set forth taking the gate being located at the connection plate mold cavity as an example. After reading the following description, it will be apparent to those skilled in the art that flow liners can be reduced when the gate is located at the appearance plate mold cavity.

In some embodiments, during the injection molding, after a hot melt material flows into the mold cavity through the gate, the hot melt material is brought into contact with a cold inner wall of the mold cavity during its flowing. As a result, the material is quickly solidified on the inner wall of the mold cavity to form a thin solidification layer. A quality of an appearance of a spray-free product depends on an arrangement of metal particles in the solidification layer, and the stable flow can allow for a uniform metal particle orientation to obtain a better appearance. In the present disclosure, the at least one gate of the mold is located on the side wall surface of the connection plate mold cavity in the thickness direction of the connection plate mold cavity and is adjacent to the appearance plate mold cavity. In this way, when the material flows out of the gate of the mold, a part of the material can directly flow towards the appearance plate mold cavity, which can shorten a path along which the material flows to the appearance plate mold cavity from the gate. As a result, it is possible to easily ensure that the material stably flows to the appearance plate mold cavity from the connection plate mold cavity, thereby reducing the flow liners at the appearance plate. Therefore, product yield of the appearance part can be at least improved to some extent, and the user's usage demands can be satisfied.

Moreover, since the other end of the appearance plate mold cavity in the width direction thereof has the minimum wall thickness, i.e., in the width direction of the appearance plate mold cavity, a thickness of a part (referred to as a large thickness portion) of the appearance plate mold cavity adjacent to the connection plate mold cavity and in direct communication with the other end of the appearance plate mold cavity in the width direction of the appearance plate mold cavity is necessarily greater than the thickness of the other end (referred to as a small thickness portion) of the appearance plate mold cavity in the width direction of the appearance plate mold cavity. In this way, in the peripheral direction of the connection plate mold cavity, the material flows in the appearance plate mold cavity. Since the thickness of the large thickness portion is greater than the thickness of the small thickness portion, the material flows easily at the large thickness portion at a higher flow velocity. As a result, the material has a forward protruding form and an obvious front edge flow at the large thickness portion. Moreover, an actual flow direction of the material at each point on its front edge surface is an outward direction perpendicular to a tangent line of the front edge surface. Therefore, the flow direction at each point on the front edge surface is divergent and does not intersect with each other. As a result, curling and rotation can be avoided, which can easily prevent the material at the large thickness portion and the material at the small thickness portion from being curled and rotated at the front edge of the material flow to some extent, to further ensure flow stability of the material. Therefore, flow liners at positions corresponding to the large thickness portion and the small thickness portion of the appearance plate can be reduced. In addition, it is possible to at least improve the product yield of the appearance part to some extent and satisfy the user's usage demands.

There are several wall thickness variation relationships for the appearance plate, and these wall thickness variation relationships will be described below.

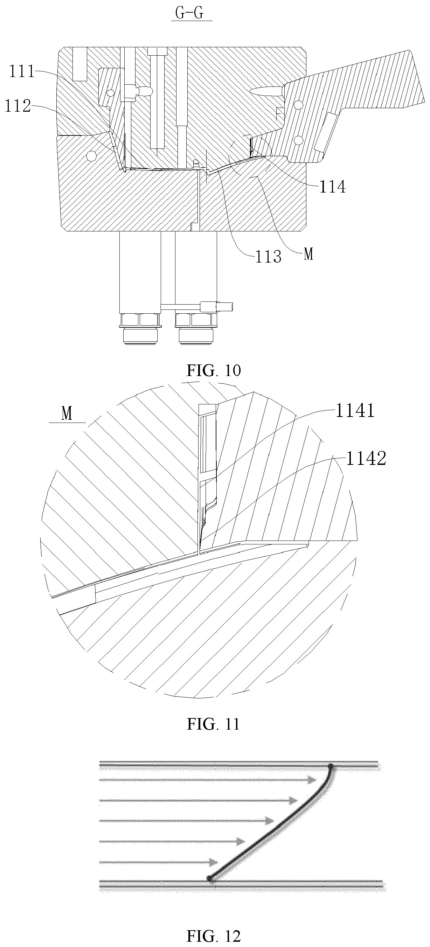

For a first wall thickness variation relationship, the wall thickness of the appearance plate gradually decreases in a direction from one end to the other end of the appearance plate in the width direction of the appearance plate. Correspondingly, in the mold, the thickness of the appearance plate mold cavity gradually decreases in a direction from one end to the other end of the appearance plate mold cavity in the width direction of the appearance plate mold cavity. In this way, in the peripheral direction of the connection plate mold cavity, when the material flows in the appearance plate mold cavity, depending on the thickness variation of the appearance plate mold cavity, it is easier for the material to flow at a position where the appearance plate mold cavity has a large thickness with small flow resistance. As a result, a front edge surface of the material flow may be an inclined surface as illustrated in FIG. 12. Moreover, the actual flow direction of the material at each point on its front edge surface is the outward direction perpendicular to the tangent line of the front edge surface. Therefore, the flow direction at each point on the front edge surface is divergent and does not intersect with each other. As a result, the curling and rotation of the material at its front edge can be avoided, and the material has more stable flow. In this manner, it is possible to further reduce the flow liners on the appearance plate, to further prevent the flow liners from being generated on the appearance surface of the appearance plate. Therefore, the qualified rate of the appearance part can be further improved, thereby lowering the cost and satisfying the user's usage demands.

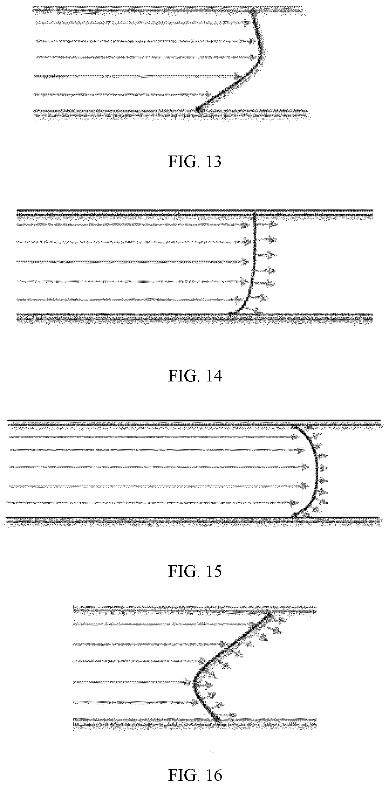

For a second wall thickness variation relationship, the wall thickness of the appearance plate is first constant and then gradually decreases in the direction from one end to the other end of the appearance plate in the width direction of the appearance plate. Correspondingly, in the mold, the thickness of the appearance plate mold cavity is first constant and then gradually decreases in the direction from one end to the other end of the appearance plate mold cavity in the width direction of the appearance plate mold cavity. In this way, in the peripheral direction of the connection plate mold cavity, when the material flows in the appearance plate mold cavity, depending on the thickness variation of the appearance plate mold cavity, it is easier for the material to flow at a position where the appearance plate mold cavity has a large thickness with small flow resistance. As a result, as illustrated in FIG. 14, the front edge surface of the material flow may include a surface substantially parallel to the width direction of the appearance plate mold cavity at a same thickness and an inclined surface towards an upstream of the material flow at a gradually decreasing thickness. Moreover, the actual flow direction of the material at each point on its front edge surface is the outward direction perpendicular to the tangent line of the front edge surface. Therefore, the flow direction at each point on the front edge surface is divergent and does not intersect with each other. As a result, the curling and rotation of the material at the front edge can be avoided, and the material has more stable flow. In this manner, it is possible to further reduce the flow liners on the appearance plate, to further prevent the flow liners from being generated on the appearance surface of the appearance plate. Therefore, the qualified rate of the appearance part can be further improved, thereby lowering the cost and satisfying the user's usage demands.

For a third wall thickness variation relationship, the wall thickness of the appearance plate first gradually increases and then gradually decreases in the direction from one end to the other end of the appearance plate in the width direction of the appearance plate. Correspondingly, in the mold, the thickness of the appearance plate mold cavity first gradually increases and then gradually decreases in the direction from one end to the other end of the appearance plate mold cavity in the width direction of the appearance plate mold cavity. In this way, in the peripheral direction of the connection plate mold cavity, when the material flows in the length direction of the appearance plate mold cavity, depending on the thickness variation of the appearance plate mold cavity, it is easier for the material to flow at a position where the appearance plate mold cavity has a large thickness with small flow resistance. As a result, the front edge surface of the material flow may have a forwarding protruding form as illustrated in FIG. 13. Moreover, the actual flow direction of the material at each point on its front edge surface is the outward direction perpendicular to the tangent line of the front edge surface. Therefore, the flow direction at each point on the front edge surface is divergent and does not intersect with each other. As a result, the curling and rotation of the material at the front edge can be avoided, and the material has more stable flow. In this manner, it is possible to further reduce the flow liners on the appearance plate, to further prevent the flow liners from being generated on the appearance surface of the appearance plate. Therefore, the qualified rate of the appearance part can be further improved, thereby lowering the cost and satisfying the user's usage demands.

For a fourth wall thickness variation relationship, in the direction from one end to the other end of the appearance plate in the width direction of the appearance plate, the wall thickness of the appearance plate first gradually increases, then remains constant, and then gradually decreases. Correspondingly, in the mold, in the direction from one end to the other end of the appearance plate mold cavity in the width direction of the appearance plate mold cavity, the thickness of the appearance plate mold cavity first gradually increases, then remains constant, and then gradually decreases. In this way, in the peripheral direction of the connection plate mold cavity, when the material flows in the length direction of the appearance plate mold cavity, depending on the thickness variation of the appearance plate mold cavity, it is easier for the material to flow at a position where the appearance plate mold cavity has a large thickness with small flow resistance. As a result, the front edge surface of the material flow may have a forward protruding form as illustrated in FIG. 15. Moreover, the actual flow direction of the material at each point on its front edge surface is the outward direction perpendicular to the tangent line of the front edge surface. Therefore, the flow direction at each point on the front edge surface is divergent and does not intersect with each other. As a result, the curling and rotation of the material at the front edge can be avoided, and the material has more stable flow. In this manner, it is possible to further reduce the flow liners on the appearance plate, to further prevent the flow liners from being generated on the appearance surface of the appearance plate. Therefore, the qualified rate of the appearance part can be further improved, thereby lowering the cost and satisfying the user's usage demands.

Therefore, compared with a recessed front edge surface illustrated in FIG. 16 in the related art, according to the above embodiments of the present disclosure, it is more conducive to the reduction of the flow liners on the appearance plate.

For explanation, provided below is that the larger the wall thickness is, the faster a flow velocity of the material is.

When the material is injected into the mold under a predetermined condition, a temperature of the material is sharply decreased due to contact with a cold wall surface of the mold cavity and generates the solidification layer. In addition, a flow area of the mold cavity is reduced as a thickness of the solidification layer increases. As a result, the thickness of the solidification layer has an important influence on the flow resistance. A relationship between the fluidity s and the thickness h of the mold cavity satisfies formula I.

$$\text{s} = \int_0^k \frac{z^2}{\eta} z = \frac{h^3}{3\eta_{rep}}$$

（Formula I）

where $\eta_{rep}$ represents viscosity of the material.

According to the fluidity formula, the fluidity s is proportional to a cube of the thickness h. For example, when the thickness is reduced by fifty percent, the fluidity will be reduced to one eighth, which means that the flow resistance is increased to eight times. As a result, the thicker the mold cavity, the lower the flow resistance, the better the fluidity, and the faster the flow velocity.

With the mold for shaping the appearance part of the household appliance according to the embodiments of the present disclosure, the other end of the appearance plate mold cavity in the width direction of the appearance plate mold cavity has the minimum thickness. In this way, it is possible to at least reduce the flow liners on the appearance plate to some extent, to at least prevent the flow liners from being generated on the appearance surface of the appearance plate to some extent. Therefore, the qualified rate of the appearance part can be at least improved to some extent, thereby lowering the cost and satisfying the user's usage demands.

With the appearance part according to the embodiments of the present disclosure, the other end of the appearance plate in the width direction of the appearance plate has the minimum wall thickness. In this way, it is possible to at least reduce the flow liners on the appearance plate to some extent, to at least prevent the flow liners from being generated on the appearance surface of the appearance plate to some extent. Therefore, the qualified rate of the appearance part can be at least improved to some extent, thereby lowering the cost and satisfying the user's usage demands.

In some embodiments of the present disclosure, a maximum wall thickness of the appearance plate ranges from 2.5 mm to 3.5 mm. Correspondingly, a maximum thickness of the appearance plate mold cavity ranges from 2.5 mm to 3.5 mm. Therefore, it is beneficial to ensure fluidity of the material in the appearance plate mold cavity to ensure that the appearance plate mold cavity is filled with the material. As a result, it is possible to at least reduce the flow liners on the appearance plate to some extent. Thus, the product yield can be improved. Moreover, it is also possible to ensure structural strength of the appearance plate and avoid heavy product and material wasting due to too large thickness of the appearance plate.

For example, the maximum wall thickness of the appearance plate is 2.6 mm, 2.7 mm, 2.8 mm, 2.9 mm, 3.0 mm, 3.1 mm, 3.2 mm, 3.3 mm, or 3.4 mm.

In some embodiments of the present disclosure, a minimum wall thickness of the appearance plate ranges from 1.5 mm to 2.5 mm. Correspondingly, a minimum thickness of the appearance plate mold cavity ranges from 1.5 mm to 2.5 mm. Therefore, it is beneficial to ensure fluidity of the material in the appearance plate to ensure that the appearance plate mold cavity is filled with the material. As a result, it is possible to at least reduce the flow liners on the appearance plate to some extent. Thus, the product yield can be improved. Moreover, it is possible to ensure the structural strength of the appearance plate.

For example, the minimum wall thickness of the appearance plate is 1.6 mm, 1.7 mm, 1.8 mm, 1.9 mm, 2.0 mm, 2.1 mm, 2.2 mm, 2.3 mm, or 2.4 mm.

In some embodiments of the present disclosure, a wall thickness of an end of the connection plate connected to the appearance plate is not greater than a wall thickness of an end of the appearance plate in the width direction of the appearance plate. Correspondingly, in the mold, a thickness of an end, in communication with the appearance plate mold cavity, of the connection plate mold cavity is not greater than a thickness of an end of the appearance plate mold cavity in the width direction of the appearance plate mold cavity. Therefore, when the material flows out of the gate of the mold adjacent to the appearance plate mold cavity, more materials can flow directly into the appearance plate mold cavity easily, which can further ensure the stable flow of the material on the appearance plate, thereby reducing the flow liners at the appearance plate.

In some embodiments of the present disclosure, the wall thickness of the end of the connection plate connected to the appearance plate is smaller than the wall thickness of the end of the appearance plate in the width direction of the appearance plate. Therefore, when the material flows out of the gate of the mold adjacent to the appearance plate mold cavity, more materials can flow directly into the appearance plate mold cavity easily, which can further ensure the stable flow of the material on the appearance plate, thereby reducing the flow liners at the appearance plate.

In some embodiments of the present disclosure, the wall thickness of the end of the connection plate connected to the appearance plate is smaller than the minimum wall thickness of the appearance plate. Correspondingly, in the mold, the thickness of the end, in communication with the appearance plate mold cavity, of the connection plate mold cavity is smaller than the minimum thickness of the appearance plate mold cavity. Therefore, when the material flows out of the gate of the mold adjacent to the appearance plate mold cavity, more materials can flow directly into the appearance plate mold cavity easily, which can further ensure the stable flow of the material on the appearance plate, thereby reducing the flow liners at the appearance plate.

In some embodiments of the present disclosure, the wall thickness of the connection plate is smaller than the wall thickness of the appearance plate. That is, the wall thickness of the connection plate is smaller than the minimum wall thickness of the appearance plate. Therefore, when the material flows out of the gate of the mold adjacent to the appearance plate mold cavity, more materials can flow directly into the appearance plate mold cavity easily, which can further ensure the stable flow of the material on the appearance plate, thereby reducing the flow liners at the appearance plate.

In some embodiments of the present disclosure, the connection plate is a connection plate of a constant wall thickness. Thus, the structure of the mold can be simplified.

In some embodiments of the present disclosure, the outer peripheral wall of the connection plate includes a first side wall surface and a second side wall surface that are arranged in the peripheral direction of the connection plate. An angle is formed between the first side wall surface and the second side wall surface. The appearance plate includes a first plate body and a second plate body that are connected to each other. An angle is formed between the first plate body and the second plate body. The first plate body is connected to the first side wall surface, and the second plate body is connected to the second side wall surface. At least one gate forming region, for example, one gate forming region, is located adjacent to a connection between the first plate body and the second plate body.

In some embodiments, in the mold, the appearance plate mold cavity includes a first plate body mold cavity and a second plate body mold cavity. The first plate body mold cavity and the second plate body mold cavity are arranged in a peripheral direction of the connection plate mold cavity and in communication with each other. The first plate body mold cavity is configured to shape the first plate body. The second plate body mold cavity is configured to shape the second plate body. An angle is formed between the first plate body mold cavity and the second plate body mold cavity. Each of the first plate body mold cavity and the second plate body mold cavity is in communication with the connection plate mold cavity. At least one gate, for example, one gate, is formed adjacent to a position where the first plate body mold cavity is in communication with the second plate body mold cavity. Therefore, during the injection molding, the material flowing out of the gate can flow to the connection plate mold cavity, the first plate body mold cavity, and the second plate body mold cavity, respectively. Thus, it is possible to prevent the material in the connection plate mold cavity, the material in the first plate body mold cavity, and the material in the second plate body mold cavity from converging with each other at a corner to generate the flow liners. Therefore, it is beneficial for more materials to converge with each other at the connection plate mold cavity, thereby further avoiding the generation of the flow liners at the appearance plate.

In some embodiments of the present disclosure, the at least one gate forming region includes a plurality of gate forming regions spaced apart from each other in the peripheral direction of the connection plate. Correspondingly, in the mold, the at least one gate includes a plurality of gates spaced apart from each other in the peripheral direction of the connection plate mold cavity. For example, a plurality of gate forming regions is formed at a position on the connection plate adjacent to the first plate body. The plurality of gate forming regions is arranged at intervals in a length direction of the first plate body. The gates may be opened sequentially in a predetermined order as the material flows in the mold cavity. In an example, a gate at the connection between the first plate body and the second plate body, i.e., a corner gate, may be first opened, and other gates are sequentially opened in the length direction of the first plate body and a direction away from the corner gate, thereby assisting in ensuring that a flow speed of the front edge of the material at a position where the appearance plate has the large wall thickness remains constantly fastest, and the front edges of the melt materials do not converge with each other.

According to some embodiments of the present disclosure, in the gate forming region on the connection plate, a minimum distance between the gate forming region adjacent to the appearance plate and the appearance plate is smaller than or equal to 20 mm. Correspondingly, in the mold, the mold core has at least one gate located on the side wall surface of the connection plate mold cavity in the thickness direction of the connection plate mold cavity, and a minimum distance between the gate adjacent to the appearance plate mold cavity and the appearance plate mold cavity is smaller than or equal to 20 mm. Optionally, the distance may be 18 mm, 16 mm, 12 mm, 10 mm, 8 mm, 5 mm, or 0 mm.

In some embodiments of the present disclosure, a minimum distance between the gate forming region formed at the appearance plate and the connection plate is smaller than or equal to 10 mm. Correspondingly, in the mold, the mold core has at least one gate located on the other side wall surface of the appearance plate mold cavity in the thickness direction of the appearance plate mold cavity and adjacent to the connection plate mold cavity, and a minimum distance between the gate and the connection plate mold cavity is smaller than or equal to 10 mm. For example, the minimum distance may be 5 mm, 2 mm, or 0 mm.

A household appliance according to the embodiments of the present disclosure includes the appearance part as described above.

With the household appliance according to the embodiments of the present disclosure, by providing the above appearance part, the thickness of the other end of the appearance plate mold cavity in the width direction of the appearance plate mold cavity is minimum, and the at least one gate is formed adjacent to the appearance plate mold cavity. As a result, it is possible to at least reduce the flow liners on the appearance plate to some extent, to at least prevent the flow liners from being generated on the appearance plate of the appearance plate to some extent. Therefore, the qualified rate of the appearance part can be at least improved to some extent, thereby lowering the cost and satisfying the user's usage demands.

A description will be provided below taking a control panel of a laundry treating device as the appearance part as an example. Of course, it can be understood that the control panel 10 is merely an example, and the appearance part may also be parts such as a dispenser handle, a worktop, and a top cover frame of the laundry treating device.

A core component of the laundry treating device, such as a control panel 10 of a front-load washing machine, is configured to control the washing machine for implementing programs such as washing, dehydrating, and drying, and has dual requirements of function and appearance.

Generally, a manufacturing process for the control panel 10 is mostly implemented through an injection molding and spraying process, and the sprayed control panel 10 has a gorgeous metal appearance effect. However, the spraying process has the defects such as serious pollution, high cost, low qualified rate, unrecyclable unqualified product, and the like, which seriously affects health of environment and production personnel, and does not conform to the green manufacturing concept. In order to overcome the defects in the spraying process, a spraying-free thermoplastic engineering material emerges, and the metal appearance effect of a product can be given by spraying-free injection molding. As a result, the spraying process can be replaced, thereby lowering production cost. Meanwhile, it is possible to avoid emission of pollutants during the spraying.

No matter whether the control panel 10 is manufactured by using a spraying-free material or through the injection molding and spraying process, for a material with poor fluidity, especially for a spraying-free material including metal particles, since there are the metal particles and other substances in the spraying-free material, uneven arrangement of the metal particles may be generated due to an obstruction to the material when flowing during the injection molding. As a result, the injection-molded product may occur light scattering under an irradiation of light, and flow liners thus are visually generated on a product, which results in a flow liner defect on the product. When the flow liners are generated on an appearance surface of the appearance part, the flow liners not only lead to low qualified rate, but also cannot satisfy user's usage demands. A description will be provided below taking the spraying-free material including metal particles as an example. That is, the control panel 10 may be a spray-free piece including a resin matrix and metal particles distributed in the resin matrix. Optionally, the metal particles are aluminum, silver, or copper.

According to the embodiments of the present disclosure, a control panel 10, a laundry treating device, and a panel mold 1 for shaping the control panel 10 will be described below. The control panel 10 is an integral injection-molding piece. As a result, a structure of the integral piece not only can ensure structural and performance stability of the control panel 10, but also leads to convenient shaping and simple manufacturing. Moreover, redundant assembly parts and connection steps can be removed, and connection reliability of the control panel 10 can be ensured. Furthermore, the integrally formed structure is high in overall strength and stability, is more convenient to be assembled, and is longer in service life. Optionally, the laundry treating device may be a washing machine, clothes dryer, or a washing and drying integrated machine.

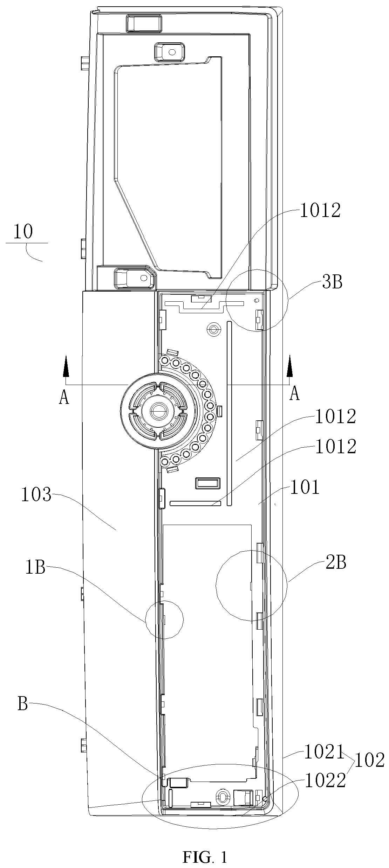

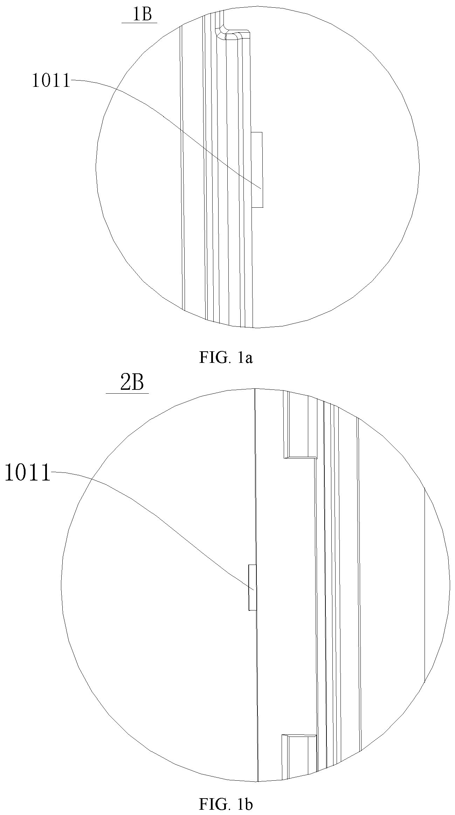

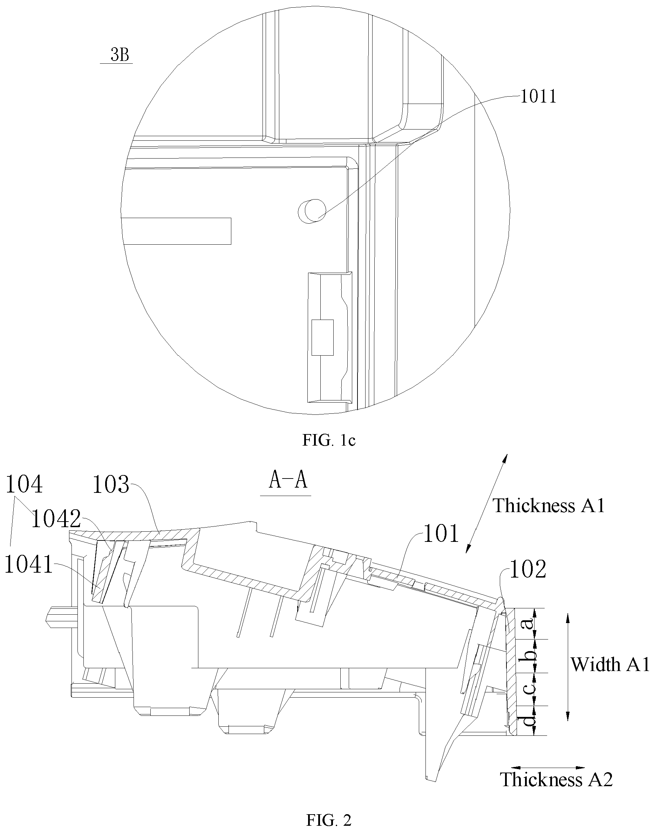

As illustrated in FIG. 1 and FIG. 2, according to embodiments of the present disclosure, a control panel 10 of a laundry treating device includes a panel connection plate 101 and a panel side plate 102.

A surface of the panel connection plate 101 is referred to as a non-appearance surface. That is, when the control panel 10 is applied in the laundry treating device, the surface of the panel connection plate 101 is not exposed.

The panel side plate 102 extends in a peripheral direction of the panel connection plate 101. An end of the panel side plate 102 in a width direction thereof is connected to an outer peripheral wall of the panel connection plate 101. A side surface of the panel side plate 102 facing away from the panel connection plate 101 in a thickness direction of the panel side plate 102 is an appearance surface. It should be noted that the end of the panel side plate 102 in the width direction thereof is an end connected to the panel connection plate 101, and another end of the panel side plate 102 in the width direction thereof is an end away from the panel connection plate 101.

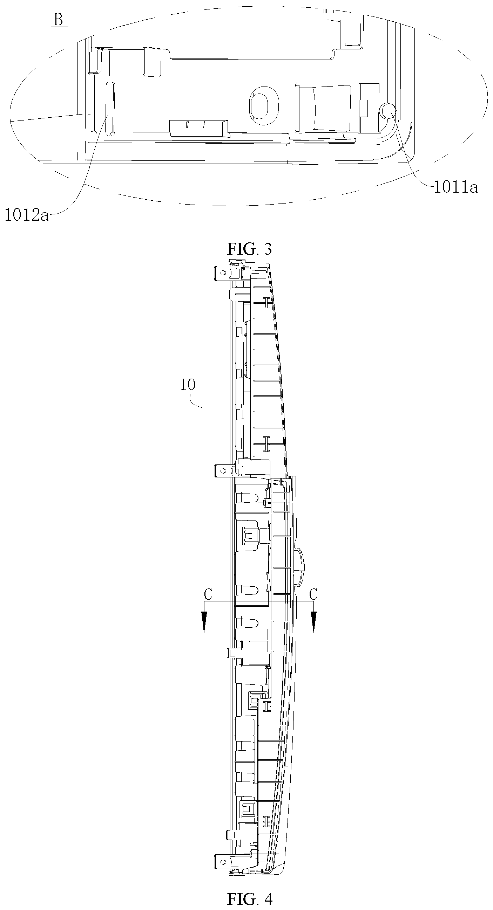

In some embodiments, as illustrated in FIG. 1a, FIG. 1b, FIG. 1c, and FIG. 3, the panel connection plate 101 has at least one panel gate forming region 1011 on a side surface of the panel connection plate 101 in a thickness direction thereof. The at least one panel gate forming region 1011 is adapted to correspond to a panel gate 1111 of the panel mold 1 and is formed adjacent to the panel side plate 102. The at least one panel gate forming region 1011 is located adjacent to the panel side plate 102, and the other end of the panel side plate 102 in the width direction thereof (i.e., an end away from the panel connection plate 101) has a minimum thickness. In this way, it is possible to at least reduce flow liners on the panel side plate 102 to some extent, to at least prevent the flow liners from being generated on an appearance surface of the panel side plate 102 to some extent. Therefore, qualified rate of the control panel 10 can be at least improved to some extent, thereby lowering cost and satisfying user's usage demands.

In some embodiments, an end, adjacent to the panel connection plate 101, of a side surface of the panel side plate 102 facing away from the appearance surface of the panel side plate 102 has at least one panel gate forming region 1011. The panel gate forming region 1011 is adapted to correspond to the panel gate 1111 of the panel mold 1. The other end of the panel side plate 102 in the width direction thereof (i.e., the end away from the panel connection plate 101) has a minimum wall thickness. Thus, it is possible to at least reduce the flow liners on the panel side plate 102 to some extent, to at least prevent the flow liners from being generated on the appearance surface of the panel side plate 102 to some extent. Therefore, the qualified rate of the control panel 10 can be at least improved to some extent, thereby lowering the cost and satisfying the user's usage demands.

In some embodiments, after a control panel blank is formed through injection molding by the panel mold 1 and is de-molded from the panel mold 1, a part of a material at the panel gate 1111 of the panel mold 1 is left on the control panel blank and is formed into a panel gate forming portion. The panel gate forming region 1011 of the control panel 10 is a region where the panel gate forming portion is located. It can be understood that the control panel blank may be further processed to cut away or partially cut away the panel gate forming portion. In an example, the panel gate forming portion of the control panel blank may not be processed. That is, the panel gate forming portion is remained on the control panel 10. The embodiment of the present disclosure is not limited in this regard, and the panel gate forming portion may be provide as desired.

In order to facilitate explaining the reason why the flow liners on the panel side plate 102 are reduced, a panel mold 1 according to embodiments of the present disclosure will be described below, and the reason why the flow liners on the appearance surface of the panel side plate 102 are reduced is illustrated in principle and in combination with a structure of the panel mold 1.

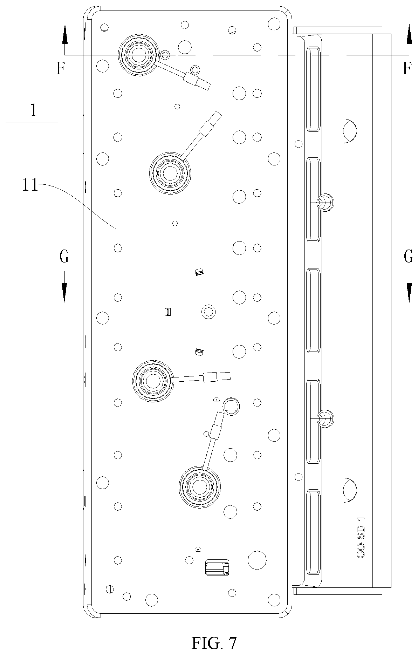

As illustrated in FIG. 7, according to the embodiments of the present disclosure, the panel mold 1 configured to shape the control panel 10 of the laundry treating device includes a panel mold core 11. The panel mold core 11 has a panel mold cavity.

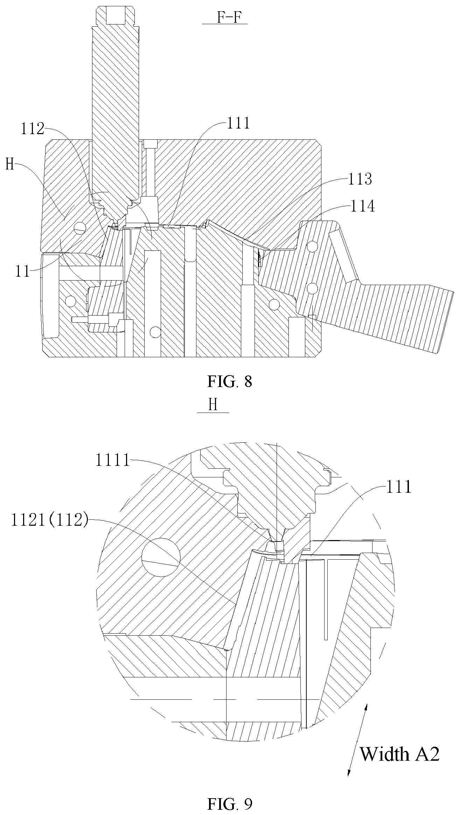

As illustrated in FIG. 8 and FIG. 9, the panel mold cavity includes a panel connection plate mold cavity 111 and a panel side plate mold cavity 112. The panel connection plate mold cavity 111 is configured to shape the panel connection plate 101 as described above. The panel side plate mold cavity 112 is configured to shape the panel side plate 102 as described above. The panel side plate mold cavity 112 extends in a peripheral direction of the panel connection plate mold cavity 111. An end of the panel side plate mold cavity 112 in a width direction thereof is in communication with an outer periphery of the panel connection plate mold cavity 111, and another end of the panel side plate mold cavity 112 in the width direction thereof has a minimum thickness. A side wall surface of the panel side plate mold cavity 112 away from the panel connection plate mold cavity 111 in a thickness direction of the panel side plate mold cavity 112 is configured to shape an appearance surface of the panel side plate 102. It can be understood that the end of the panel side plate mold cavity 112 in the width direction thereof is an end in communication with the panel connection plate mold cavity 111, and the other end of the panel side plate mold cavity 112 in the width direction thereof is an end away from the outer periphery of the panel connection plate mold cavity 111.

In some embodiments, as illustrated in FIG. 9, the panel mold core 11 has at least one panel gate 1111 located on a side wall surface of the panel connection plate mold cavity 111 in a thickness direction of the panel connection plate mold cavity 111. The at least one panel gate 1111 is formed adjacent to the panel side plate mold cavity 112.

In some embodiments, the panel mold core 11 has at least one panel gate 1111 located on another side wall surface of the panel side plate mold cavity 112 in the thickness direction of the panel side plate mold cavity 112 (i.e., a side wall surface opposite to an appearance surface for shaping the panel side plate 102) and adjacent to the panel connection plate mold cavity 111.

The reason why the flow liners are reduced will be set forth taking the panel gate 1111 being located at the panel connection plate mold cavity 111 as an example. After reading the following description, it will be apparent to those skilled in the art that the flow liners can be reduced when the panel gate 111 is located at the panel side plate mold cavity 112.

In some embodiments, during the injection molding, after a hot melt material flows into the panel mold cavity through the panel gate 1111, the hot melt material is brought into contact with a cold inner wall of the panel mold cavity during its flowing. As a result, the material is quickly solidified on the inner wall of the panel mold cavity to form a thin solidification layer. A quality of an appearance of a spray-free product depends on an arrangement of metal particles in the solidification layer, and the stable flow can allow for a uniform metal particle orientation to obtain a better appearance. According to the embodiments of the present disclosure, at least one panel gate 1111 of the panel mold 1 is located on the side wall surface of the panel connection plate mold cavity 111 in the thickness direction of the panel connection plate mold cavity 111, and at least one of the panel gates 1111 is located adjacent to the panel side plate mold cavity 112. In this way, when the material flows out of the panel gate 1111 of the panel mold 1, a part of the material can directly flow towards the panel side plate mold cavity 112, which can shorten a path along which the material flows to the panel side plate mold cavity 112 from the panel gate 1111. As a result, it is possible to easily ensure that the material stably flows to the panel side plate mold cavity 112 from the panel connection plate mold cavity 111, thereby reducing the flow liners at the panel side plate 112. Therefore, product yield of the control panel 10 can be improved to some extent, and the user's usage demands can be satisfied.

Moreover, since the other end of the panel side plate mold cavity 112 in the width direction thereof has the minimum thickness, i.e., in the width direction of the panel side plate mold cavity 112, a thickness of a part (referred to as a large thickness portion) of the panel side plate mold cavity 112 adjacent to the panel connection plate mold cavity 111 and in direct communication with the other end of the panel side plate mold cavity 112 in the width direction of the panel side plate mold cavity 112 is necessarily greater than the thickness of the other end (referred to as a small thickness portion) of the panel side plate mold cavity 112 in the width direction of the panel side plate mold cavity 112. In this way, in the peripheral direction of the panel connection plate mold cavity 111, the material flows in the panel side plate mold cavity 112. Since the thickness of the large thickness portion is greater than the thickness of the small thickness portion, the material flows easily at the large thickness portion at a higher flow velocity. As a result, the material has a forward protruding form and an obvious front edge flow at the large thickness portion. Moreover, an actual flow direction of the material at each point on its front edge surface is an outward direction perpendicular to a tangent line of the front edge surface. Therefore, the flow direction at each point on the front edge surface is divergent and does not intersect with each other. As a result, curling and rotation can be avoided, which can easily prevent the material at the large thickness portion and the material at the small thickness portion from being curled and rotated at the front edge of the material flow to some extent, to further ensure flow stability of the material. Therefore, flow liners at positions of the panel side plate 102 corresponding to the large thickness portion and the small thickness portion can be reduced. In addition, it is possible to at least improve the product yield of the control panel 10 to some extent and satisfy the user's usage demands.

There are several wall thickness variation relationships for the panel side plate 102, and these wall thickness variation relationships will be described below.

For a first wall thickness variation relationship, the wall thickness of the panel side plate 102 gradually decreases in a direction from one end to the other end of the panel side plate 102 in the width direction of the panel side plate 102. Correspondingly, in the panel mold 1, the thickness of the panel side plate mold cavity 112 gradually decreases in a direction from one end to the other end of the panel side plate mold cavity 112 in the width direction of the panel side plate mold cavity 112. In this way, in the peripheral direction of the panel connection plate mold cavity 111, when the material flows in the panel side plate mold cavity 112, depending on the thickness variation of the panel side plate mold cavity 112, it is easier for the material to flow at a position where the panel side plate mold cavity 112 has a large thickness with small flow resistance. As a result, a front edge surface of the material flow may be an inclined surface as illustrated in FIG. 12. Moreover, the actual flow direction of the material at each point on its front edge surface is the outward direction perpendicular to the tangent line of the front edge surface. Therefore, the flow direction at each point on the front edge surface is divergent and does not intersect with each other. As a result, the curling and rotation of the material at its front edge can be avoided, and the material has more stable flow. In this manner, it is possible to further reduce the flow liners on the panel side plate 102, to further prevent the flow liners from being generated on the appearance surface of the panel side plate 102. Therefore, the qualified rate of the control panel 10 can be further improved, thereby lowering the cost and satisfying the user's usage demands.

For a second wall thickness variation relationship, the wall thickness of the panel side plate 102 is first constant and then gradually decreases in the direction from one end to the other end of the panel side plate 102 in the width direction of the panel side plate 102. Correspondingly, in the panel mold 1, the thickness of the panel side plate mold cavity 112 is first constant and then gradually decreases in the direction from one end to the other end of the panel side plate mold cavity 112 in the width direction of the panel side plate mold cavity 112. In this way, in the peripheral direction of the panel connection plate mold cavity 111, when the material flows in the length direction of the panel side plate mold cavity 112, depending on the thickness variation of the panel side plate mold cavity 112, it is easier for the material to flow at the position where the panel side plate mold cavity 112 has the large thickness with small flow resistance. As a result, as illustrated in FIG. 14, the front edge surface of the material flow may include a surface substantially parallel to the width direction of the panel side plate mold cavity 112 at a same thickness and an inclined surface towards an upstream of the material flow at a gradually decreasing thickness. Moreover, the actual flow direction of the material at each point on its front edge surface is the outward direction perpendicular to the tangent line of the front edge surface. Therefore, the flow direction at each point on the front edge surface is divergent and does not intersect with each other. As a result, the curling and rotation of the material at the front edge can be avoided, and the material has more stable flow. In this manner, it is possible to further reduce the flow liners on the panel side plate 102, to further prevent the flow liners from being generated on the appearance surface of the panel side plate 102. Therefore, the qualified rate of the control panel 10 can be further improved, thereby lowering the cost and satisfying the user's usage demands.

For a third wall thickness variation relationship, the wall thickness of the panel side plate 102 first gradually increases and then gradually decreases in the direction from one end to the other end of the panel side plate 102 in the width direction of the panel side plate 102. Correspondingly, in the panel mold 1, the thickness of the panel side plate mold cavity 112 first gradually increases and then gradually decreases in the direction from one end to the other end of the panel side plate mold cavity 112 in the width direction of the panel side plate mold cavity 112. In this way, in the peripheral direction of the panel connection plate mold cavity 111, when the material flows in the length direction of the panel side plate mold cavity 112, depending on the thickness variation of the panel side plate mold cavity 112, it is easier for the material to flow at the position where the panel side plate mold cavity 112 has the large thickness with small flow resistance. As a result, the front edge surface of the material flow may have a forwarding protruding form as illustrated in FIG. 13. Moreover, the actual flow direction of the material at each point on its front edge surface is the outward direction perpendicular to the tangent line of the front edge surface. Therefore, the flow direction at each point on the front edge surface is divergent and does not intersect with each other. As a result, the curling and rotation of the material at the front edge can be avoided, and the material has more stable flow. In this manner, it is possible to further reduce the flow liners on the panel side plate 102, to further prevent the flow liners from being generated on the appearance surface of the panel side plate 102. Therefore, the qualified rate of the control panel 10 can be further improved, thereby lowering the cost and satisfying the user's usage demands.

For a fourth wall thickness variation relationship, in the direction from one end to the other end of the panel side plate 102 in the width direction of the panel side plate 102, the wall thickness of the panel side plate 102 first gradually increases, then remains constant, and then gradually decreases. Correspondingly, in the panel mold 1, in the direction from one end to the other end of the panel side plate mold cavity 112 in the width direction of the panel side plate mold cavity 112, the thickness of the panel side plate mold cavity 112 first gradually increases, then remains constant, and then gradually decreases. In this way, in the peripheral direction of the panel connection plate mold cavity 111, when the material flows in the length direction of the panel side plate mold cavity 112, depending on the thickness variation of the panel side plate mold cavity 112, it is easier for the material to flow at the position where the panel side plate mold cavity 112 has the large thickness with small flow resistance. As a result, the front edge surface of the material flow may have a forward protruding form as illustrated in FIG. 15. Moreover, the actual flow direction of the material at each point on its front edge surface is the outward direction perpendicular to the tangent line of the front edge surface. Therefore, the flow direction at each point on the front edge surface is divergent and does not intersect with each other. As a result, the curling and rotation of the material at the front edge can be avoided, and the material has more stable flow. In this manner, it is possible to further reduce the flow liners on the panel side plate 102, to further prevent the flow liners from being generated on the appearance surface of the panel side plate 102. Therefore, the qualified rate of the control panel 10 can be further improved, thereby lowering the cost and satisfying the user's usage demands.

Therefore, compared with a recessed front edge surface illustrated in FIG. 16 in the related art, according to the above embodiments of the present disclosure, it is more conducive to the reduction of the flow liners on the panel side plate 102.

For explanation, provided below is that the larger the wall thickness is, the faster a flow velocity of the material is.

When the material is injected into the panel mold 1 under a predetermined condition, a temperature of the material is sharply decreased due to contact with a cold wall surface of the panel mold cavity and generates the solidification layer. In addition, a flow area of the panel mold cavity is reduced as a thickness of the solidification layer increases. As a result, the thickness of the solidification layer has an important influence on the flow resistance. A relationship between the fluidity s and the thickness h of the panel mold cavity satisfies formula I.

$$s = \int_0^k \frac{z^2}{\eta} z = \frac{h^3}{3\eta_{rep}}$$

（Formula I）

where $\eta_{rep}$ represents viscosity of the material.

According to the fluidity formula, the fluidity s is proportional to a cube of the thickness h. For example, when the thickness is reduced by fifty percent, the fluidity will be reduced to one eighth, which means that the flow resistance is increased to eight times. As a result, the thicker the panel mold cavity, the lower the flow resistance, the better the fluidity, and the faster the flow velocity.

With the panel mold 1 for shaping the control panel 10 of the household appliance according to the embodiments of the present disclosure, the other end of the control panel mold cavity 112 in the width direction of the panel side plate mold cavity 112 has the minimum thickness. In this way, it is possible to at least reduce the flow liners on the panel side plate 102 to some extent, to at least prevent the flow liners from being generated on the appearance surface of the panel side plate 102 to some extent. Therefore, the qualified rate of the control panel 10 can be at least improved to some extent, thereby lowering the cost and satisfying the user's usage demands.

With the control panel mold 10 of the household appliance according to the embodiments of the present disclosure, the other end of the panel side plate 102 in the width direction of the panel side plate 102 has the minimum wall thickness. In this way, it is possible to at least reduce the flow liners on the panel side plate 102 to some extent, to at least prevent the flow liners from being generated on the appearance surface of the panel side plate 102 to some extent. Therefore, the qualified rate of the control panel 10 can be at least improved to some extent, thereby lowering the cost and satisfying the user's usage demands.

In some embodiments of the present disclosure, a maximum wall thickness of the panel side plate 102 ranges from 2.5 mm to 3.5 mm. Correspondingly, a maximum thickness of the panel side plate mold cavity 112 ranges from 2.5 mm to 3.5 mm. Therefore, it is beneficial to ensure fluidity of the material in the panel side plate mold cavity 112 to ensure that the panel side plate mold cavity 112 is filled with the material. As a result, it is possible to at least reduce the flow liners on the panel side plate 102 to some extent. Thus, the product yield can be improved. Moreover, it is also possible to ensure structural strength of the panel side plate 102, and avoid heavy product and material wasting due to too large thickness of the panel side plate 102.

For example, the maximum wall thickness of the panel side plate 102 is 2.6 mm, 2.7 mm, 2.8 mm, 2.9 mm, 3.0 mm, 3.1 mm, 3.2 mm, 3.3 mm, or 3.4 mm.

In some embodiments of the present disclosure, a minimum wall thickness of the panel side plate 102 ranges from 1.5 mm to 2.5 mm. Correspondingly, a minimum thickness of the panel side plate mold cavity 112 ranges from 1.5 mm to 2.5 mm. Therefore, it is beneficial to ensure the fluidity of the material in the panel side plate 102 to ensure that the panel side plate 102 is filled with the material. As a result, it is possible to at least reduce the flow liners on the panel side plate 102 to some extent. Thus, the product yield can be improved. Moreover, it is possible to ensure the structural strength of the panel side plate 102.

For example, the minimum wall thickness of the panel side plate 102 is 1.6 mm, 1.7 mm, 1.8 mm, 1.9 mm, 2.0 mm, 2.1 mm, 2.2 mm, 2.3 mm, or 2.4 mm.

In some embodiments of the present disclosure, as illustrated in FIG. 2, the panel side plate 102 is divided into four equal sections in the width direction of the panel side plate 102. In the direction from one end to the other end of the panel side plate 102 in the width direction of the panel side plate 102, the four sections are sequentially referred to as a section a, a section b, a section c, and a section d.

Optionally, a wall thickness of the section a > a wall thickness of the section b > a wall thickness of the section c > a wall thickness of the section d. The wall thickness of the section a ranges from 2.8 mm to 3.5 mm. The wall thickness of the section b ranges from 2.5 mm to 3.0 mm. The wall thickness of the section c ranges from 2.5 mm to 2.8 mm. The wall thickness of the section d ranges from 1.5 mm to 2.5 mm.

Optionally, the wall thickness of the section b > the wall thickness of the section a > the wall thickness of the section c > the wall thickness of the section d. The wall thickness of the section a ranges from 2.5 mm to 2.8 mm. The wall thickness of the section b ranges from 2.8 mm to 3.5 mm. The wall thickness of the section c ranges from 2.5 mm to 2.8 mm. The wall thickness of the section d ranges from 1.5 mm to 2.5 mm.

Optionally, the wall thickness of the section a = the wall thickness of the section b = the wall thickness of the section c > the wall thickness of the section d. The wall thickness of the section a ranges from 2.5 mm to 3.5 mm. The wall thickness of the section d ranges from 1.5 mm to 2.5 mm.

Optionally, the wall thickness of the section a > the wall thickness of the section b = the wall thickness of the section c > the wall thickness of the section d. The wall thickness of the section a ranges from 2.5 mm to 3.5 mm. The wall thickness of the section d ranges from 1.5 mm to 2.5 mm.

In some embodiments of the present disclosure, a wall thickness of an end of the panel connection plate 101 connected to the panel side plate 102 is not greater than a wall thickness of the end of the panel side plate 102 in the width direction of the panel side plate 102. Correspondingly, in the panel mold 1, a thickness of an end, in communication with the panel side plate mold cavity 112, of the panel connection plate mold cavity 111 is not greater than a thickness of an end of the panel side plate mold cavity 112 in the width direction of the panel side plate mold cavity 112. Therefore, when the material flows out of the panel gate 1111 of the panel mold 1 adjacent to the panel side plate mold cavity 112, more materials can flow directly into the panel side plate mold cavity 112 easily, which can further ensure the stable flow of the material on the panel side plate 102, thereby reducing the flow liners at the panel side plate 102.

In some embodiments of the present disclosure, the wall thickness of the end of the panel connection plate 101 connected to the panel side plate 102 is smaller than the wall thickness of the end of the panel side plate 102 in the width direction of the panel side plate 102. Correspondingly, in the panel mold 1, the thickness of the end, in communication with the panel side plate mold cavity 112, of the panel connection plate mold cavity 111 is smaller than the thickness of the end of the panel side plate mold cavity 112 in the width direction of the panel side plate mold cavity 112. Therefore, when the material flows out of the panel gate 1111 of the panel mold 1 adj acent to the panel side plate mold cavity 112, more materials can flow directly into the panel side plate mold cavity 112 easily, which can further ensure the stable flow of the material on the panel side plate 102, thereby reducing the flow liners at the panel side plate 102.

In some embodiments of the present disclosure, the wall thickness of the panel connection plate 101 is smaller than the wall thickness of the panel side plate 102. That is, the wall thickness of the panel connection plate 101 is smaller than the minimum wall thickness of the panel side plate 102. Correspondingly, in the panel mold 1, the thickness of the panel connection plate mold cavity 111 is smaller than the minimum thickness of the panel side plate mold cavity 112. Therefore, when the material flows out of the panel gate 1111 of the panel mold 1 adjacent to the panel side plate mold cavity 112, more materials can flow directly into the panel side plate mold cavity 112 easily, which can further ensure the stable flow of the material on the panel side plate 102, thereby reducing the flow liners at the panel side plate 102.

In some embodiments of the present disclosure, the panel connection plate 101 is a connection plate of a constant wall thickness. Thus, the structure of the panel mold 1 can be simplified.

According to some embodiments of the present disclosure, in the panel gate forming region 1011 on the panel connection plate 101, a minimum distance between the panel gate forming region 1011 adjacent to the panel side plate 102 and the panel side plate 102 is smaller than or equal to 20 mm. Correspondingly, in the panel mold 1, the panel mold core has the at least one panel gate 1111 located on the side wall surface of the panel connection plate mold cavity 111 in the thickness direction of the panel connection plate mold cavity 111, and a minimum distance between the panel gate 1111 adjacent to the panel side plate mold cavity 112 and the panel side plate mold cavity 112 is smaller than or equal to 20 mm. Optionally, the minimum distance may be 18 mm, 16 mm, 12 mm, 10 mm, 8 mm, 5 mm, or 0 mm. In this way, it is possible to allow more materials to flow directly into the panel side plate mold cavity 112 easily, to further ensure the stable flow of material on the panel side plate 102, thereby reducing the flow liners at the panel side plate 102.

In some embodiments of the present disclosure, a minimum distance between the panel gate forming region 1011 located at the panel side plate 102 and the panel connection plate 101 is smaller than or equal to 10 mm. Correspondingly, in the panel mold 1, the panel mold core has at least one panel gate 1111 formed on the other side wall surface of the panel side plate mold cavity 112 in the thickness direction of the panel side plate mold cavity 112 and adjacent to the panel connection plate mold cavity 111, and a minimum distance between the panel gate 1111 and the panel connection plate mold cavity 111 is smaller than or equal to 10 mm. For example, the minimum distance may be 5 mm, 2 mm, or 0 mm. Therefore, it is beneficial that more materials can flow directly into the panel side plate mold cavity 112 easily, to further ensure the stable flow of the material on the panel side plate 102, thereby reducing the flow liners at the panel side plate 102.

In some embodiments of the present disclosure, as illustrated in FIG. 1, FIG. 1a, FIG. 1b, and FIG. 1c, the outer peripheral wall of the panel connection plate 101 includes a first side wall surface and a second side wall surface that are arranged in the peripheral direction of the panel connection plate 101. An angle is formed between the first side wall surface and the second side wall surface. The panel side plate 102 includes a first side plate body 1021 and a second side plate body 1022 that are connected to each other. An angle is formed between the first side plate body 1021 and the second side plate body 1022. The first side plate body 1021 is connected to the first side wall surface, and the second side plate body 1022 is connected to the second side wall surface. One of the panel gate forming regions 1011a is formed adjacent to a connection between the first side plate body 1021 and the second side plate body 1022 (for example, a minimum distance between the panel gate forming region 1011 located adj acent to the connection between the first side plate body 1021 and the second side plate body 1022 and the first side plate body 1021 is smaller than or equal to 20 mm, for example, 0 mm, and a minimum distance between the panel gate forming region 1111 located adjacent to the connection between the first side plate body 1021 and the second side plate body 1022 and the second side plate body 1022 is smaller than or equal to 20 mm, for example, 0 mm).

In some embodiments, as illustrated in FIG. 9, in the panel mold 1, the panel side plate mold cavity 112 includes a first side plate body mold cavity 1121 and a second side plate body mold cavity. The first side plate body mold cavity 1121 and the second side plate body mold cavity are arranged in the peripheral direction of the panel connection plate mold cavity 111 and in communication with each other. The first side plate body mold cavity 1121 is configured to shape the first side plate body 1021. The second side plate body mold cavity is configured to shape the second side plate body 1022. An angle is formed between the first side plate body mold cavity 1121 and the second side plate body mold cavity. Each of the first side plate body mold cavity 1121 and the second side plate body mold cavity is in communication with the panel connection plate mold cavity 111. One of panel gates 1111 is formed adj acent to a position where the first side plate body mold cavity 1121 is in communication with the second side plate body mold cavity. Therefore, during the injection molding, the material flowing out of the panel gate 1111 can flow to the panel connection plate mold cavity 111, the first side plate body mold cavity 1121, and the second side plate body mold cavity, respectively. Thus, it is possible to prevent the material in the panel connection plate mold cavity 111, the material in the first side plate body mold cavity 1121, and the material in the second side plate body mold cavity from converging with each other at a corner to generate the flow liners. Therefore, it is beneficial for more materials to converge with each other at the panel connection plate mold cavity 111, thereby further avoiding the generation of the flow liners at the panel side plate 102.

In some embodiments of the present disclosure, a plurality of panel gate forming regions 1011 is formed at a position on the panel connection plate 101 adjacent to the first side plate body 1021. The plurality of panel gate forming regions 1011 is arranged at intervals in a length direction of the first side plate body 1021. The panel gates 1111 may be opened sequentially in a predetermined order as the material flows in the panel mold cavity. In an example, a panel gate 1111 at the connection between the first side plate body 1021 and the second side plate body 1022, i.e., a corner panel gate 1111, may be first opened, and other panel gates are sequentially opened in the length direction of the first side plate body 1021 and a direction away from the corner panel gate 1111, thereby assisting in ensuring that a flow speed of the front edge of the material at a position where the panel side plate 102 has the large wall thickness remains constantly fastest, and the front edges of the melt materials do not converge with each other.

In some embodiments of the present disclosure, as illustrated in FIG. 1 and FIG. 2, the control panel 10 includes a panel top plate 103. The panel top plate 103 is connected to the outer peripheral wall of the panel connection plate 101. The panel top plate 103 and the panel side plate 102 are sequentially arranged in the peripheral direction of the panel connection plate 101. Correspondingly, in the panel mold 1, the panel mold cavity includes a panel top plate mold cavity 113. The panel top plate mold cavity 113 is configured to shape the panel top plate 103, and is in communication with the outer periphery of the panel connection plate mold cavity 111. The panel top plate mold cavity 113 and the panel side plate mold cavity 112 are sequentially arranged in the peripheral direction of the panel connection plate mold cavity 111. Thus, the structure is simple.

In some embodiments of the present disclosure, at least one panel gate forming region 1011 is formed at a position on the panel connection plate 101 adjacent to the panel top plate 103 (for example, a minimum distance between the panel gate forming region 1011 and the panel top plate 103 is not greater than 20 mm, optionally, is 10 mm or 0 mm). When the plurality of panel gate forming regions 1011 is formed at the position on the panel connection plate 101 adjacent to the panel top plate 103, the plurality of panel gate forming regions 1011 is arranged at intervals in a length direction of the panel top plate 103. As a result, more materials can enter the panel top plate mold cavity 113 easily to reduce the flow liners at the panel top plate 103.

In some embodiments of the present disclosure, as illustrated in FIG. 1, one side surface of the panel top plate 103 in a thickness direction thereof is referred to as an appearance surface. A plurality of panel blocking holes 1012 is formed on the panel connection plate 101 and arranged at intervals. The plurality of panel blocking holes 1012 penetrates the panel connection plate 101 in the thickness direction of the panel connection plate 101. Some of the plurality of panel gate forming regions 1011 are formed adjacent to the panel side plate 102, and the remaining of the plurality of panel gate forming regions 1011 are formed adjacent to the panel top plate 103. Some of the plurality of panel blocking holes 1012 are formed adjacent to the panel side plate 102 (for example, a minimum distance between each of the panel blocking holes 1012 and the panel side plate 102 is not greater than 20 mm), and the remaining of the plurality of panel blocking holes 1012 are formed adjacent to the panel top plate 103 (for example, a minimum distance between each of the panel blocking holes 1012 and the panel top plate 103 is not greater than 20 mm). Some of the plurality of panel blocking holes 1012 are spaced apart from some of the plurality of panel gate forming regions 1011 in the peripheral direction of the panel connection plate 11, and the remaining of the plurality of panel blocking holes 1012 are spaced apart from the remaining of the plurality of panel gate forming regions 1011 in the peripheral direction of the panel connection plate 11.

Correspondingly, in the panel mold 1, a plurality of panel post structures is provided in the panel connection plate mold cavity 111 and arranged at intervals. The plurality of panel post structures is configured to shape the panel blocking holes 1012 and extends across the panel connection plate mold cavity 111 in the thickness direction of the panel connection plate mold cavity 111. Some of the plurality of panel gates 1111 are formed adjacent to the panel side plate mold cavity 112, and the remaining of the plurality of panel gates 1111 are formed adjacent to the panel top plate mold cavity 113. Some of the plurality of panel post structures are formed adjacent to the panel side plate mold cavity 112 and are spaced apart from some of the plurality of panel gates 1111 in the peripheral direction of the panel connection plate mold cavity 111. The remaining of the plurality of panel post structures are disposed adjacent to the panel top plate mold cavity 113 and are spaced apart from the remaining of the plurality of panel gates 1111 in the peripheral direction of the panel connection plate mold cavity 111.

Since some of the panel gates 1111 of the panel mold 1 are located adjacent to the panel side plate mold cavity 112, and the remaining of the panel gates 1111 of the panel mold 1 are formed adjacent to the panel top plate mold cavity 113, a part of the material flowing out of some of the panel gates 1111 of the panel mold 1 flows to the panel connection plate mold cavity 111 towards a center of the panel connection plate mold cavity 111, and the rest part of the material directly flows to the panel side plate mold cavity 112 through an edge of the panel connection plate mold cavity 111. In order to prevent superfluous materials from flowing towards the panel side plate mold cavity 112 after the panel connection plate mold cavity 111 is filled with the material flowing towards the center of the panel connection plate mold cavity 111 to prevent the part of the material from converging, in the panel side plate mold cavity 112, with the material originally located in the panel side plate mold cavity 112. Therefore, by providing the panel post structure at a position on the panel connection plate mold cavity 111 adjacent to the panel side plate mold cavity 112, it is possible to further prevent the flow liners from being generated on the panel side plate 102.

Similarly, a part of the material flowing out of the remaining of the panel gates 1111 of the panel mold 1 flows to the panel connection plate mold cavity 111 towards the center of the panel connection plate mold cavity 111, and the rest part of the material directly flows to the panel top plate mold cavity 113 through the edge of the panel connection plate mold cavity 111. In order to prevent superfluous materials from flowing to the panel top plate mold cavity 113 after the panel connection plate mold cavity 111 is filled with the material flowing towards the center of the panel connection plate mold cavity 111 to prevent the part of the material from converging, in the panel top plate mold cavity 113, with the material originally located in the panel top plate mold cavity 113. Therefore, by providing the panel post structure at the position on the panel connection plate mold cavity 111 adjacent to the panel top plate mold cavity 113, it is possible to further prevent the flow liners from being generated on the panel top plate 103.

In some embodiments of the present disclosure, a minimum distance between the panel gate forming region 1011 adjacent to the panel top plate 103 and the panel top plate 103 is smaller than or equal to 20 mm. Correspondingly, in the panel mold 1, a minimum distance between a panel gate 1111 adjacent to the panel top plate mold cavity 113 and the panel top plate mold cavity 113 is smaller than or equal to 20 mm. Optionally, the minimum distance between the panel gate forming region 1011 adjacent to the panel top plate 103 and the panel top plate 103 is 10 mm, 8 mm, 3 mm, or 0 mm.

In some embodiments of the present disclosure, a minimum distance between the blocking hole adjacent to the panel top plate and the panel top plate is smaller than or equal to 20 mm. Correspondingly, a minimum distance between the panel post structure adjacent to the panel top plate mold cavity 113 and the panel top plate mold cavity 113 is smaller than or equal to 20 mm. For example, the minimum distance between the blocking hole adjacent to the panel top plate and the panel top plate is 10 mm, 8 mm, 3 mm, or 0 mm.

In some embodiments of the present disclosure, a minimum distance between the panel blocking hole adjacent to the panel side plate and the panel side plate is smaller than or equal to 20 mm. Correspondingly, in the mold, a minimum distance between the panel post structure adjacent to the panel side plate mold cavity 112 and the panel side plate mold cavity 112 is smaller than or equal to 20 mm. For example, the minimum distance between the panel blocking hole adjacent to the panel side plate and the panel side plate is 10 mm, 8 mm, 3 mm, or 0 mm.

In some embodiments of the present disclosure, the outer peripheral wall of the panel connection plate 101 includes a first side wall surface, a second side wall surface, and a third side wall surface that are sequentially arranged in the peripheral direction of the panel connection plate 101. The third side wall surface is opposite to the first side wall surface. An angle is formed between the second side wall surface and the first side wall surface. The panel side plate 102 includes a first side plate body 1021 and a second side plate body 1022 that are connected to each other. An angle is formed between the first side plate body 1021 and the second side plate body 1022. The first side plate body 1021 is connected to the first side wall surface. The second side plate body 1022 is connected to the second side wall surface. The panel top plate 103 is connected to the third side wall surface. An end of the panel top plate 103 adjacent to the second side wall surface is connected to the second side plate body 1022. As illustrated in FIG. 3, one of the panel gate forming regions 1011a is formed adjacent to a connection between the second side plate body 1022 and the first side plate body 1021, and one of the panel blocking holes 1012a is formed adjacent to a connection between the second side plate body 1022 and the panel top plate 103.

Correspondingly, in the panel mold 1, in the peripheral direction of the panel connection plate mold cavity 111, the panel side plate mold cavity 112 includes a first side plate body mold cavity 1121 and a second side plate body mold cavity that are in communication with each other. The first side plate body mold cavity 1121 is configured to shape the first side plate body 1021. The second side plate body mold cavity is configured to shape the second side plate body 1022. An angle is formed between the first side plate body mold cavity 1121 and the second side plate body mold cavity. Each of the first side plate body mold cavity 1121 and the second side plate body mold cavity is in communication with the panel connection plate mold cavity 111. An end of the panel top plate mold cavity 113 adjacent to the second side plate body mold cavity is in communication with the second side plate body mold cavity. One of the panel gate 1111 is formed adjacent to a position where the first side plate body mold cavity 1121 is in communication with the second side plate body mold cavity, and one of the panel post structures is located adjacent to a position where the second side plate body mold cavity is in communication with the panel top plate mold cavity 113.

During the injection molding, one of the panel gates 1111 is formed adjacent to the position where the first side plate body mold cavity 1121 is in communication with the second side plate body mold cavity. Therefore, when the material flows out of this panel gate, it is more beneficial that the material can flow to the panel connection plate mold cavity 111, the first side plate body mold cavity 1121, and the second side plate body mold cavity, respectively. Thus, it is possible to prevent the material in the panel connection plate mold cavity 111, the material in the first side plate body mold cavity 1121, and the material in the second side plate body mold cavity from converging with each other at the corner to generate the flow liners, thereby further avoiding the generation of the flow liners at the panel side plate 102. In addition, one of the panel post structures is disposed adjacent to the position where the second side plate body mold cavity is in communication with the panel top plate mold cavity 113. Thus, it is possible to prevent the material flowing through the panel connection plate mold cavity 111 from flowing to the second side plate body mold cavity and the panel top plate mold cavity 113, to prevent the material originally located in the second side plate body mold cavity and the material originally located in the panel top plate mold cavity 113 from converging, in the second side plate body mold cavity and the panel top plate mold cavity 113, with the material flowing through the panel connection plate mold cavity 111. Therefore, the flow liners on both the panel side plate 102 and the panel top plate 103 can be further reduced.

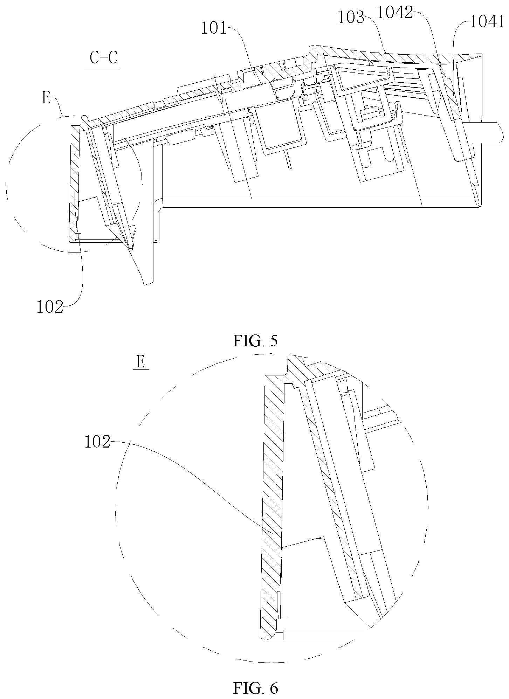

In some embodiments of the present disclosure, as illustrated in FIG. 2 and FIG. 5, a side surface of the panel top plate 103 in the thickness direction thereof is refers to as the appearance surface, and a panel connection rib 104 is provided on the other side surface of the panel top plate 103 in the thickness direction of the panel top plate 103. The panel connection rib 104 includes a panel connection rib body 1041 and a panel connection portion 1042. The panel connection portion 1042 is connected between the panel connection rib body 1041 and the panel top plate 103.

Correspondingly, in the panel mold 1, the panel mold cavity includes a panel connection rib mold cavity 114. A side wall surface of the panel top plate mold cavity 113 in a thickness direction thereof is configured to shape an appearance surface of the panel top plate 103. The panel connection rib mold cavity 114 is located on the other side wall surface of the panel top plate mold cavity 113 in the thickness direction of the panel top plate mold cavity 113 and is in communication with the panel top plate mold cavity 113. The panel connection rib mold cavity 114 includes a panel connection rib body mold cavity 1141 and a panel connection portion mold cavity 1142 that are in communication with each other. The panel connection portion mold cavity 1142 is communicated between the panel connection rib body mold cavity 1141 and the panel connection plate mold cavity 111. Therefore, by providing the panel connection rib 104, structural strength of the panel top plate 103 can be enhanced.

Optionally, a thickness of the panel connection portion 1042 is smaller than a thickness of an end of the panel connection rib body 1041 connected to the panel connection portion 1042. In the panel mold 1, a thickness of the panel connection portion mold cavity 1142 is smaller than a thickness of an end, in communication with the panel connection portion mold cavity 1142, of the panel connection rib body mold cavity 1141. In some embodiments, during the injection molding, since no panel gate 1111 is formed at a wall surface of the panel connection rib mold cavity 114, when the material flows in the panel mold cavity, the material first flows through the panel top plate mold cavity 113, and then flows to the panel connection rib mold cavity 114 through the panel top plate mold cavity 113. Moreover, by setting the thickness of the panel connection portion mold cavity 1142 smaller than a thickness of the panel connection rib body mold cavity 1141, it is possible to at least prevent the unstable flow field from being formed at a position where the panel connection rib mold cavity 114 is in communication with the panel top plate mold cavity 113 to some extent, to at least avoid the material converging due to a backflow of the material in the panel connection rib body mold cavity 1141 to the panel top plate mold cavity 113 through the panel connection portion mold cavity 1142 to some extent, thereby preventing the flow liners from being generated at the connection of the panel top plate 103 to the panel connection rib 104.

Optionally, the thickness of the panel connection portion 1042 is smaller than the thickness of the panel connection rib body 1041. Therefore, it is possible to at least prevent the unstable flow field from being formed at the position where the panel connection rib mold cavity 114 is in communication with the panel top plate mold cavity 113 to some extent, to at least avoid the material converging due to the backflow of the material in the panel connection rib body mold cavity 1141 to the panel top plate mold cavity 113 through the panel connection portion mold cavity 1142 to some extent, thereby preventing the flow liners from being generated at the connection of the panel top plate 103 to the panel connection rib 104.

Optionally, a part of a surface of the panel connection portion 1042 facing towards the panel top plate 103 is recessed away from the panel top plate 103 to form a panel through hole. The panel through hole penetrates the panel connection portion 1042 in the thickness direction of the panel connection portion 1042. Correspondingly, in the panel mold 1, the panel connection portion mold cavity 1142 is provided with a panel post structure for forming the panel through hole. The panel post structure extends across the panel connection portion mold cavity 1142 in the thickness direction of the panel connection portion mold cavity 1142. In this way, since no panel gate 1111 is formed at the panel connection rib mold cavity 114, when the material flows in the panel mold cavity, the material first flows through the panel top plate mold cavity 113, and then flows to the panel connection rib mold cavity 114 through the panel top plate mold cavity 113. Moreover, by providing the panel post structure, the panel post structure can reduce a flow area of a material flowing across the position where the panel connection rib mold cavity 114 is in communication with the panel top plate mold cavity 113. As a result, it is possible to at least prevent the unstable flow field from being formed at the position where the panel connection rib mold cavity 114 is in communication with the panel top plate mold cavity 113 to some extent, to at least avoid the material converging due to the backflow of the material in the panel connection rib body mold cavity 1141 to the panel top plate mold cavity 113 through the panel connection portion mold cavity 1142 to some extent, thereby preventing the flow liners from being generated at the connection of the panel top plate 103 to the panel connection rib 104.

In some embodiments of the present disclosure, the thickness of the panel connection plate 101 is smaller than a thickness of an end of the panel top plate 103 connected to the panel connection plate 101. Correspondingly, in the panel mold 1, the thickness of the panel connection plate mold cavity 111 is smaller than a thickness of an end, in communication with the panel connection plate mold cavity 111, of the panel top plate mold cavity 113. Therefore, when the material flows out of the panel gate 1111 of the panel mold 1 adjacent to the panel top plate mold cavity 113, it is more beneficial for more materials to directly flow to the panel top plate mold cavity 113, to further ensure that the material flows stably to the panel top plate mold cavity 113 from the panel connection plate mold cavity 111, thereby reducing the flow liners at the panel top plate 103.

In some embodiments of the present disclosure, the thickness of the panel connection plate 101 is smaller than a thickness of the panel top plate 103. Correspondingly, in the panel mold 1, the thickness of the panel connection plate mold cavity 111 is smaller than a thickness of the panel top plate mold cavity 113. Therefore, when the material flows out of the panel gate 1111 of the panel mold 1 adjacent to the panel top plate mold cavity 113, it is more beneficial for more materials to directly flow to the panel top plate mold cavity 113, to further ensure that the material flows stably to the panel top plate mold cavity 113 from the panel connection plate mold cavity 111, thereby reducing an obstruction to the material flow and the flow liners at the panel top plate 103.

In some embodiments of the present disclosure, a wall thickness of the panel top plate 103 gradually decreases in a direction away from the panel connection plate 101; or the wall thickness of the panel top plate 103 is constant and then gradually decreases in the direction away from the panel connection plate 101; or the wall thickness of the panel top plate 103 gradually increases and then gradually decreases in the direction away from the panel connection plate 101; or in the direction away from the panel connection plate 101, the wall thickness of the panel top plate 103 gradually increases, then remains constant, and then gradually decreases. In this way, it is possible to further reduce the flow liners on the panel top plate 103, to further prevent the flow liners from being generated on the appearance surface of the panel top plate 103. Therefore, it is possible to further improve the qualified rate of the control panel 10, thereby lowering the cost and satisfying the user's usage demands.

A laundry treating device according to the embodiments of the present disclosure includes the control panel 10 of the laundry treating device as described above.

With the laundry treating device according to the embodiments of the present disclosure, by providing the control panel 10, the other end of the panel side plate 102 in the width direction thereof has the minimum wall thickness, and the at least one panel gate forming region 1011 is formed adjacent to the panel side plate 102. In this way, it is possible to at least reduce the flow liners on the panel side plate 102 to some extent, to at least prevent the flow liners from being generated on the appearance surface of the panel side plate 102 to some extent. Therefore, the qualified rate of the control panel 10 can be at least improved to some extent, thereby lowering the cost and satisfying the user's usage demands.

In the description of the present disclosure, it is to be understood that, terms such as "center", "longitudinal", "lateral", "length", "width", "thickness", "over", "below", "front", "back", "left", "right", "vertical", "horizontal", "top", "bottom", "in", "out", "clockwise", "counterclockwise", "axial", "radial", "peripheral", etc., is based on the orientation or position relationship shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure. In the description of the present disclosure, "first feature" and "second feature" may include one or more of the features. In the description of the present disclosure, "plurality" means two or more. In the description of the present disclosure, the first feature being "on" or "under" the second feature may include the scenarios that the first feature is in direct contact with the second feature, or the first and second features, instead of being in direct contact with each other, are in contact with each other through another feature therebetween. In the description of the present disclosure, the first feature being "on", "above", and "over" the second feature may mean that the first feature is directly above or obliquely above the second feature, or simply mean that the level of the first feature is higher than that of the second feature.

Other components of a laundry treating device according to the embodiments of the present disclosure, such as a motor and a control system, and operations are known to those of ordinary skill in the art, and are not described in detail herein.

In the description of this specification, descriptions with reference to the terms "an embodiment", "some embodiments", "schematic embodiments", "examples", "specific examples", or "some examples", etc. mean that specific features, structure, materials, or characteristics described in conjunction with the embodiment or example are included in at least one embodiment or example of the present disclosure. In this specification, the schematic representations of the above terms do not necessarily refer to the same embodiment or example. Moreover, the described specific features, structures, materials, or characteristics may be combined in any one or more embodiments or examples in a suitable manner.

Although the embodiments of the present disclosure are illustrated and described above, it can be understood by those of ordinary skill in the art that various changes, modifications, substitutions, and alterations may be made to these embodiments without departing from the principles and spirit of the present disclosure. The scope of the present disclosure is defined by the claims and their equivalents.

**Claims**

1. An appearance part, wherein the appearance part is an integral injection-molding piece, the appearance part comprising: a connection plate; and an appearance plate extending in a peripheral direction of the connection plate, a side surface of the appearance plate in a thickness direction of the appearance plate being an appearance surface, an end of the appearance plate in a width direction of the appearance plate being connected to an outer peripheral wall of the connection plate, and a wall thickness of the appearance plate gradually increasing, and then gradually decreasing in a direction from the end to another end of the appearance plate in the width direction of the appearance plate, wherein: a side surface of the connection plate in a thickness direction of the connection plate has at least one gate forming region formed adjacent to the appearance plate; and/or an end, adjacent to the connection plate, of a side surface of the appearance plate facing away from the appearance surface of the appearance plate has at least one gate forming region; and the at least one gate forming region is adapted to correspond to a gate of a mold.

2. The appearance part according to claim 1, wherein a wall thickness of an end of the connection plate connected to the appearance plate is equal to or smaller than a wall thickness of the end of the appearance plate in the width direction of the appearance plate.

3. The appearance part according to claim 2, wherein the wall thickness of the end of the connection plate connected to the appearance plate is smaller than a minimum wall thickness of the appearance plate.

4. The appearance part according to any one of claims 1 to 3, wherein: in the peripheral direction of the connection plate, the appearance plate comprises a first plate body and a second plate body that are connected to each other, an angle being formed between the first plate body and the second plate body, and each of the first plate body and the second plate body being connected to the connection plate; and the at least one gate forming region is formed adjacent to a connection between the first plate body and the second plate body.

5. The appearance part according to any one of claims 1 to 4, wherein the at least one gate forming region comprises a plurality of gate forming regions spaced apart from each other in the peripheral direction of the connection plate.

6. The appearance part according to any one of claims 1 to 5, wherein the appearance part is a spray-free piece comprising a resin matrix and metal particles distributed in the resin matrix.

7. The appearance part according to claim 6, wherein the metal particles are aluminum, silver, or copper.

8. The appearance part according to any one of claims 1 to 7, wherein: the at least one gate forming region is formed on the side surface of the connection plate in the thickness direction of the connection plate; and a minimum distance between the at least one gate forming region adjacent to the appearance plate and the appearance plate is smaller than or equal to 20 mm.

9. The appearance part according to claim 8, wherein the minimum distance between the at least one gate forming region adjacent to the appearance plate and the appearance plate is smaller than or equal to 10 mm.

10. The appearance part according to claim 9, wherein the minimum distance between the at least one gate forming region adjacent to the appearance plate and the appearance plate is 0 mm.

11. The appearance part according to any one of claims 1 to 7, wherein an end, adjacent to the connection plate, of a side surface of the appearance plate facing away from the appearance surface of the appearance plate has at least one gate forming region, a minimum distance between the at least one gate forming region and the connection plate being smaller than or equal to 10 mm.

**12.** The appearance part according to claim 11, wherein the end, adjacent to the connection plate, of the side surface of the appearance plate facing away from the appearance surface of the appearance plate has the at least one gate forming region, the minimum distance between the at least one gate forming region and the connection plate being equal to 0 mm.

**13.** A household appliance, comprising the appearance part according to any one of claims 1 to 12.

**14.** A mold, comprising: a mold core having a mold cavity, the mold cavity comprising an appearance plate mold cavity and a connection plate mold cavity, the appearance plate mold cavity extending in a peripheral direction of the connection plate mold cavity, an end of the appearance plate mold cavity in a width direction of the appearance plate mold cavity being in communication with an outer periphery of the connection plate mold cavity, a thickness of the appearance plate mold cavity gradually increasing and then gradually decreasing in a direction from the end to another end of the appearance plate mold cavity in the width direction of the appearance plate mold cavity, and a side wall surface of the appearance plate mold cavity in a thickness direction of the appearance plate mold cavity being configured to shape an appearance surface of an appearance plate, wherein the mold core has at least one gate located on a side wall surface of the connection plate mold cavity in a thickness direction of the connection plate mold cavity, the at least one gate being formed adjacent to the appearance plate mold cavity; and/or the mold core has at least one gate located on another side wall surface of the appearance plate mold cavity in the thickness direction of the appearance plate mold cavity and adjacent to the connection plate mold cavity.

**15.** The mold according to claim 14, wherein a thickness of an end, in communication with the appearance plate mold cavity, of the connection plate mold cavity is smaller than or equal to a thickness of the end of the appearance plate mold cavity in the width direction of the appearance plate mold cavity.

**16.** The mold according to claim 15, wherein the thickness of the end, in communication with the appearance plate mold cavity, of the connection plate mold cavity is smaller than a minimum thickness of the appearance plate mold cavity.

**17.** The mold according to any one of claims 14 to 16, wherein: in the peripheral direction of the connection plate mold cavity, the appearance plate mold cavity comprises a first plate body mold cavity and a second plate body mold cavity that are in communication with each other, an angle being formed between the first plate body mold cavity and the second plate body mold cavity, and each of the first plate body mold cavity and the second plate body mold cavity being in communication with the connection plate mold cavity; and the at least one gate is formed adjacent to a communication between the first plate body mold cavity and the second plate body mold cavity.

**18.** The mold according to any one of claims 14 to 17, wherein the at least one gate comprises a plurality of gates spaced apart from each other in the peripheral direction of the connection plate mold cavity.

**19.** The mold according to any one of claims 14 to 18, wherein a minimum distance between the at least one gate adjacent to the appearance plate mold cavity and the appearance plate mold cavity is smaller than or equal to 20 mm.

**20.** The mold according to any one of claims 14 to 18, wherein the mold core has at least one gate located on the other side wall surface of the appearance plate mold cavity in the thickness direction of the appearance plate mold cavity and adjacent to the connection plate mold cavity, a minimum distance between the at least one gate and the connection plate mold cavity being smaller than or equal to 10 mm.

FIG. 1

1B

1011

FIG. 1a

2B

1011

FIG. 1b

3B

1011

FIG. 1c

104  103  A−A

1042

1041

Thickness A1

101

102

a

b

c

d

Width A1

Thickness A2

FIG. 2

B

1011a

1012a

FIG. 3

10

C          C

FIG. 4

C—C

101

103 1042 1041

E

102

FIG. 5

E

102

FIG. 6

FIG. 7

F-F

112    111

H    113

114

11

FIG. 8

H

1111    111

1121 (112)

Width A2

FIG. 9

G-G

111

112

114

113  M

FIG. 10

M

1141

1142

FIG. 11

FIG. 12

FIG. 13

FIG. 14

FIG. 15

FIG. 16

## INTERNATIONAL SEARCH REPORT

| International application No. |
|---|
| **PCT/CN2020/141969** |

**A. CLASSIFICATION OF SUBJECT MATTER**

D06F 34/28(2020.01)i; B29C 45/27(2006.01)i

According to International Patent Classification (IPC) or to both national classification and IPC

**B. FIELDS SEARCHED**

Minimum documentation searched (classification system followed by classification symbols)

D06F; B29C

Documentation searched other than minimum documentation to the extent that such documents are included in the fields searched

Electronic data base consulted during the international search (name of data base and, where practicable, search terms used)

CNPAT, WPI, EPODOC, CNKI: 厚度, 注塑, 浇口, 流痕, 外观, 壁厚, 距离, 流纹, 模具, 模腔, 型腔, 前凸, 卷曲, 翻转, 内凹, thickness, inject+, gate, flow+, mark+, exterior, outward, distance, mould, mold+, cavity

**C. DOCUMENTS CONSIDERED TO BE RELEVANT**

| Category* | Citation of document, with indication, where appropriate, of the relevant passages | Relevant to claim No. |
|---|---|---|
| X | CN 211440969 U (TIANJIN REFULL TIANKE MOLD&DIE CO., LTD.) 08 September 2020 (2020-09-08) <br> description, pages 1-3, and figures 1-6 | 1-20 |
| E | CN 112430978 A (WUXI LITTLE SWAN ELECTRICAL APPLIANCE CO., LTD.) 02 March 2021 (2021-03-02) <br> description, paragraphs 64-135, figures 1-16 | 1-20 |
| E | CN 112626798 A (WUXI LITTLE SWAN ELECTRICAL APPLIANCE CO., LTD.) 09 April 2021 (2021-04-09) <br> description, paragraphs 148-279, figures 1-16 | 1-20 |
| E | CN 112522914 A (WUXI LITTLE SWAN ELECTRICAL APPLIANCE CO., LTD.) 19 March 2021 (2021-03-19) <br> description, paragraphs 55-174, figures 1-16 | 1-20 |
| E | CN 112522912 A (WUXI LITTLE SWAN ELECTRICAL APPLIANCE CO., LTD.) 19 March 2021 (2021-03-19) <br> description, paragraphs 152-223, figures 1-16 | 1-20 |
| A | CN 101134355 A (SUZUKI MOTOR CORPORATION) 05 March 2008 (2008-03-05) <br> entire document | 1-20 |

☑ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **30 July 2021** | **30 August 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/141969** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 103528337 A (HEFEI MIDEA REFRIGERATOR CO., LTD.) 22 January 2014 (2014-01-22)<br>entire document | 1-20 |
| A | CN 107166859 A (HEFEI MIDEA REFRIGERATOR CO., LTD. et al.) 15 September 2017 (2017-09-15)<br>entire document | 1-20 |
| A | CN 209903809 U (IV TECHMOULD SUZHOU CO., LTD.) 07 January 2020 (2020-01-07)<br>entire document | 1-20 |
| A | CN 111434833 A (BSH ELECTRICAL APPLIANCES (JIANGSU) CO., LTD. et al.) 21 July 2020 (2020-07-21)<br>entire document | 1-20 |
| A | JP H05337984 A (SANKO CO., INC.) 21 December 1993 (1993-12-21)<br>entire document | 1-20 |
| A | US 2020353658 A1 (KONICA MINOLTA INC.) 12 November 2020 (2020-11-12)<br>entire document | 1-20 |

Form PCT/ISA/210 (second sheet) (January 2015)

## INTERNATIONAL SEARCH REPORT
### Information on patent family members

International application No.

**PCT/CN2020/141969**

| Patent document cited in search report | | | Publication date (day/month/year) | Patent family member(s) | | | Publication date (day/month/year) |
|---|---|---|---|---|---|---|---|
| CN | 211440969 | U | 08 September 2020 | None | | | |
| CN | 112430978 | A | 02 March 2021 | None | | | |
| CN | 112626798 | A | 09 April 2021 | None | | | |
| CN | 112522914 | A | 19 March 2021 | None | | | |
| CN | 112522912 | A | 19 March 2021 | None | | | |
| CN | 101134355 | A | 05 March 2008 | US | 8715795 | B2 | 06 May 2014 |
| | | | | US | 2008118708 | A1 | 22 May 2008 |
| | | | | JP | 4978117 | B2 | 18 July 2012 |
| | | | | JP | 2008049652 | A | 06 March 2008 |
| | | | | DE | 102007036197 | A1 | 05 June 2008 |
| | | | | DE | 102007036197 | B4 | 22 March 2012 |
| | | | | CN | 101134355 | B | 07 September 2011 |
| CN | 103528337 | A | 22 January 2014 | CN | 103528337 | B | 21 October 2015 |
| CN | 107166859 | A | 15 September 2017 | None | | | |
| CN | 209903809 | U | 07 January 2020 | None | | | |
| CN | 111434833 | A | 21 July 2020 | EP | 3680383 | A1 | 15 July 2020 |
| JP | H05337984 | A | 21 December 1993 | JP | 3604404 | B2 | 22 December 2004 |
| US | 2020353658 | A1 | 12 November 2020 | WO | 2019116680 | A1 | 20 June 2019 |
| | | | | EP | 3702123 | A4 | 09 December 2020 |
| | | | | JP | WO2019116680 | A1 | 03 December 2020 |
| | | | | EP | 3702123 | A1 | 02 September 2020 |

Form PCT/ISA/210 (patent family annex) (January 2015)

**REFERENCES CITED IN THE DESCRIPTION**

**Patent documents cited in the description**

- CN 202011385088

- CN 202022841918